# EUROPEAN PATENT APPLICATION

(11) **EP 4 793 810 A1**
(43) Date of publication of application: **19.08.2026**
(21) Application number: 26158650.7
(22) Date of filing: 13.02.2026
(51) Int. Cl.: G06F 21/62, G06F 21/74, G06F 21/75, G06F 21/81, G06F 1/3287, G06F 3/01

(54) **SECURE HARDWARE-ENFORCED SENSOR PRIVACY SYSTEMS AND METHODS FOR PERFORMING THEREON**

(30) Priority: 18.02.2025 US 202563760047 P; 06.02.2026 US 202619533026
(71) Applicant: Meta Platforms Technologies, LLC, Menlo Park, CA 94025 (US)
(72) Inventor: Satpathy, Sudhir, Menlo Park (US); Powiertowski, Wojciech Stefan, Menlo Park (US); Hodges, Marcus Eugene, Menlo Park (US); Modadugu, Nagendra Gupta, Menlo Park (US); Chhodavdia, Avdhesh, Menlo Park (US)
(74) Representative: Murgitroyd & Company

(57) **Abstract**

An example system includes a mute circuit that stores a mute state that is modifiable only through hardware operations. The circuit receives a mute trigger signal from a hardware source. In response to the mute trigger signal, the mute circuit atomically applies the enforced mute state to one or more sensors. In accordance with the mute trigger signal no longer being received, the mute circuit atomically clears the enforced mute state from the one or more sensors. The circuits, systems and methods described herein enable hardware-enforced sensor privacy in consumer devices, such as augmented reality devices.

## Description

### RELATED APPLICATIONS

This application claims the benefit of U.S. Provisional Patent Application No. 63/760,047 filed February 18, 2025, entitled "Secure Hardware-Enforced Sensor Privacy Systems".

### TECHNICAL FIELD

The disclosed implementations relate generally to secure hardware architectures and circuits including but not limited to systems and methods for hardware-enforced privacy controls in sensor processing pathways.

### BACKGROUND

Sensor privacy mechanisms in conventional systems often rely on software-based controls that can be vulnerable to tampering or manipulation through software exploits. Software-dependent approaches may fail to provide atomic operations during privacy state transitions, potentially leading to incomplete or inconsistent privacy enforcement. Furthermore, systems with fixed privacy configurations struggle to adapt to evolving privacy policies or dynamic system requirements without requiring hardware modifications.

Additionally, traditional sensor processing architectures typically route all sensor data through a common processing pathway under control of the main operating system. Such architectures can expose sensitive sensor data to potential security vulnerabilities in the operating system and applications. Also, conventional systems that implement privacy indicators often lack hardware-level coordination between the indicator state and actual sensor operation, potentially leading to misleading privacy status information for users.

### SUMMARY

The present invention provides a system, a method and a non-transitory computer-readable storage medium as defined in the appended claims.

To address the vulnerabilities of software-based privacy controls and the lack of atomic operations during privacy state transitions, some of the circuits and methods described herein implement hardware-enforced privacy muting for sensors. For example, some of the circuits described herein use atomic mute operations with hardware-locked enforcement masks and configurable trigger mechanisms to provide tamper-resistant privacy controls that cannot be compromised through software exploits. By implementing mute entry and exit as atomic operations at the hardware level, the described techniques can ensure complete and consistent privacy enforcement that persists across software operations and cannot be defeated by malicious code.

To overcome the security vulnerabilities inherent in traditional sensor processing architectures that route all sensor data through a common pathway under control of the main operating system, some of the systems described herein implement isolated secure and non-secure processing paths with a trusted execution environment. For example, the disclosed architectures can provide controlled routing of sensor data while maintaining separate security domains for different operational modes, thereby protecting sensitive sensor data from potential security vulnerabilities in the operating system and applications. Additionally, by providing hardware-level coordination between privacy indicator states and actual sensor operation, the described systems can ensure that users receive accurate privacy status information.

In accordance with a first aspect, there is provided a system comprising:
a mute circuit configured to:
store a mute state, the mute state modifiable only through hardware operations;
receive a mute trigger signal from a hardware source;
in response to the mute trigger signal, atomically apply the mute state to one or more sensors; and
in accordance with the mute trigger signal no longer being received, atomically clear the mute state from the one or more sensors.

The system may further comprise:
a timer configured to:
   count upon initiation of and while a mute trigger signal is being received; and
   generate a failure signal if the mute state is not atomically applied to the one or more sensors within a predetermined time; and
the mute circuit further configured to atomically apply the mute state in response to either (i) a success signal indicating successful application of the mute state, or (ii) the failure signal from the timer.

The system may further comprise:
a mute pending register configured to:
in response to receiving the mute trigger signal, set a pending bit;
maintain the pending bit, wherein the mute circuit is further configured to ignore subsequent mute trigger signal changes while the pending bit is maintained; and
in response to a software command, clear the pending bit.

The system may further comprise:
an initialization register configured to:
store unmasked states of at least one of: a GPIO input, a virtual wire input, and a hardware-generated request;
prevent further modifications to the unmasked states until a hardware reset occurs; and
activate mute enforcement based on the unmasked states.

The mute circuit may be further configured to enter a mute state based on an initial state of enabled trigger inputs when an initialization done bit is set, without generating an interrupt.

The mute state may be retained through a software reset operation.

The system may further comprise a plurality of microcontroller units configured to:
coordinate atomic mute operations across a plurality of subsystems based on predetermined mute sequences; and
enforce synchronized mute state transitions across the plurality of subsystems.

Applying the mute state may comprise using a mute mask register configured to store a mute enforcement mask that can only be modified through write-1-to-set operations.

In accordance with a second aspect, there is provided a method, comprising:
storing, by a mute circuit of a system, a mute state, the mute state modifiable only through hardware operations;
receiving, by the mute circuit, a mute trigger signal from a hardware source;
in response to the mute trigger signal, atomically applying, by the mute circuit, the mute state to one or more sensors; and
in accordance with the mute trigger signal no longer being received, atomically clearing, by the mute circuit, the mute state from the one or more sensors.

The method may further comprise:
counting, by a timer of the system, upon initiation of and while a mute trigger signal is being received;
generating, by the timer, a failure signal if the mute state is not atomically applied by the mute circuit to the one or more sensors within a predetermined time; and
atomically applying, by the mute circuit, the mute state in response to either (i) a success signal indicating successful application of the mute state, or (ii) the failure signal from the timer.

The method may further comprise:
in response to receiving the mute trigger signal, setting, by a mute pending register of the system, a pending bit;
maintaining, by the mute pending register, the pending bit, wherein the mute circuit is further configured to ignore subsequent mute trigger signal changes while the pending bit is maintained; and
in response to a software command, clearing, by the mute pending register, the pending bit.

The method may further comprise:
storing, in an initialization register of the system, unmasked states of at least one of: a GPIO input, a virtual wire input, and a hardware-generated request;
preventing, in the initialization register, further modifications to the unmasked states until a hardware reset occurs; and
activating, in the initialization register, mute enforcement based on the unmasked states.

The mute circuit may be further configured to enter a mute state based on an initial state of enabled trigger inputs when an initialization done bit is set, without generating an interrupt.

The mute state may be retained through a software reset operation.

In accordance with a third aspect, there is provided a non-transitory computer-readable storage medium comprising executable instructions that, when executed by one or more processors, cause:
a mute circuit to:
store a mute state, the mute state modifiable only through hardware operations;
receive a mute trigger signal from a hardware source;
in response to the mute trigger signal, atomically apply the mute state to one or more sensors; and
in accordance with the mute trigger signal no longer being received, atomically clear the mute state from the one or more sensors.

The executable instructions, when executed by the one or more processors, may further cause:
a timer to:
   count a timer upon initiation of and while a mute trigger signal is being received; and
   generate a failure signal if the mute state is not atomically applied to the one or more sensors within a predetermined time; and
the mute circuit further configured to atomically apply the mute state in response to either (i) a success signal indicating successful application of the mute state, or (ii) the failure signal from the timer.

The executable instructions, when executed by the one or more processors, may further cause:
a mute pending register to:
in response to receiving the mute trigger signal, set a pending bit;
maintain the pending bit, wherein the mute circuit is further configured to ignore subsequent mute trigger signal changes while the pending bit is maintained; and
in response to a software command, clear the pending bit.

The executable instructions, when executed by the one or more processors, may further cause:
an initialization register to:
store unmasked states of at least one of: a GPIO input, a virtual wire input, and a hardware-generated request;
prevent further modifications to the unmasked states until a hardware reset occurs; and
activate mute enforcement based on the unmasked states.

The mute circuit may be further configured to enter a mute state based on an initial state of enabled trigger inputs when an initialization done bit is set, without generating an interrupt.

The mute state may be retained through a software reset operation.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

Having summarized the above example aspects, a brief description of the drawings will now be presented.

### BRIEF DESCRIPTION OF THE DRAWINGS

For a better understanding of the various described implementations, reference should be made to the Description of Implementations below, in conjunction with the following drawings in which like reference numerals refer to corresponding parts throughout the figures.
Figure 1A illustrates an example secure hardware-enforced sensor privacy system architecture, according to some embodiments.
Figure 1B shows an example trust hierarchy in accordance with some embodiments.
Figure 2 is a schematic diagram of an example hardware implementation in accordance with some embodiments.
Figure 3 is a block diagram of an example hardware privacy mute circuit architecture in accordance with some embodiments.
Figure 4 shows a block diagram of an example secure sensor system in accordance with some embodiments.
Figure 5 illustrates an example sensor data flow architecture in accordance with some embodiments.
Figure 6 is a schematic diagram of an example hardware-level implementation of a secure sensor architecture in accordance with some embodiments.
Figure 7 is a schematic diagram of another example hardware-level implementation of a secure sensor architecture in accordance with some embodiments.
Figure 8 shows an example method flow chart for a mute circuit storing a mute state in accordance with some embodiments.
Figure 9 shows an example method flow chart for secure sensor operation in accordance with some embodiments.
Figures 10A, 10B, 10C-1, and 10C-2 illustrate example MR and AR systems in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DESCRIPTION OF IMPLEMENTATIONS

Some embodiments include a system (e.g. a system-on-a-chip (SoC)) that includes a hardware privacy mute circuit that stores an enforced mute state modifiable only through hardware operations. The hardware privacy mute circuit also receives a mute trigger signal from a hardware source, atomically applies the enforced mute state to disable one or more sensors in response to activation of the mute trigger signal, and atomically clears the enforced mute state to enable the one or more sensors in response to deactivation of the mute trigger signal. Some embodiments include a method for storing (e.g., by a hardware privacy mute circuit of a SoC) an enforced mute state that cannot be modified through software operations once set. The method also includes receiving a mute trigger signal from a hardware source, atomically applying the enforced mute state to disable one or more sensors in response to activation of the mute trigger signal, and atomically clearing the enforced mute state to enable the one or more sensors in response to deactivation of the mute trigger signal.

Some embodiments include a SoC that includes a hardware-enforced privacy mute circuit. The hardware-enforced privacy mute circuit includes a mute mask register configured to store a mute enforcement mask that can only be modified through write-1-to-set operations, a mute enforcement status register configured to store a current mute enforcement status, and a mute initialization register. In some embodiments, the privacy mute circuit is a system, and the mute mask register, mute enforcement status register, and mute initialization register are storage units. In some embodiments, the mute initialization register includes a plurality of enable bits corresponding to different mute trigger input sources, an enable lock bit configured to prevent further modifications to the enable bits until a hardware reset occurs when set, and an initialization done bit configured to activate mute enforcement based on enabled trigger inputs when set. The circuit also includes mute control logic configured to receive a mute trigger signal from at least one of: a General-Purpose Input/Output (GPIO) input, a virtual wire input, or a hardware-generated request. In response to a transition of the mute trigger signal from an inactive state to an active state, the logic atomically applies the mute enforcement mask to disable sensors and signals the mute state change. In response to a transition from active to inactive state, the logic atomically clears the mute enforcement mask and signals the state change. The mute enforcement mask cannot be modified through software operations once set except through a hardware reset of the SoC.

Some embodiments include a secure sensor system, which includes a sensor configured to capture data, a secure processing pathway coupled to the sensor, a non-secure processing pathway coupled to the sensor, and a trusted execution environment. The trusted execution environment is configured to control routing of sensor data between the secure and non-secure processing pathways, selectively enable muting of the sensor, and manage privacy indicators associated with operation of the sensor. The secure processing pathway processes sensor data without exposure to a non-secure operating system. Some embodiments include a method for securing sensor operation. The method includes capturing data using a sensor, routing sensor data between secure and non-secure processing pathways, selectively enabling muting of the sensor, and managing privacy indicators associated with operation of the sensor. Processing sensor data in the secure processing pathway occurs without exposure to a non-secure operating system.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an extended-reality headset (e.g., a mixed-reality (MR) headset or a pair of augmented-reality (AR) glasses as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

The present disclosure describes hardware-enforced sensor privacy mechanisms and secure sensor processing architectures that address limitations in conventional software-based approaches. In some embodiments, a mute circuit maintains a mute state through hardware-only operations, where the mute state cannot be altered by software once established. For example, when a hardware trigger signal activates, the circuit applies the mute state to sensors as a single indivisible operation, and similarly clears the state atomically when the trigger deactivates. As an illustrative example, a physical switch on augmented reality glasses may connect directly to the mute circuit through a GPIO pin, bypassing all software layers. When a user toggles this switch, the circuit immediately disables camera and microphone sensors without any software involvement, and the muted condition persists even if malicious code attempts to re-enable the sensors. In some embodiments, register structures enforce one-way state changes. A mute mask register may accept only write-1-to-set operations, meaning software can add sensors to the muted set but cannot remove them. This prevents scenarios where compromised firmware might silently re-enable sensors. The register values persist through software resets and clear only during hardware reset events, providing protection against attacks that attempt to cycle the system to defeat privacy controls.

The present disclosure also describes coordinated mute operations across multiple processing units within a system-on-a-chip. For example, a timer may monitor mute operations and generate a signal if the operation does not complete within a predetermined period, ensuring that the system reaches a known privacy state even if some subsystems fail to respond. Multiple microcontroller units may coordinate to enforce synchronized state transitions, preventing partial muting scenarios where some sensors remain active. In some embodiments, isolated processing pathways handle sensor data. As an example, a secure pathway may process computer vision data through dedicated hardware without exposing the data to the main operating system, while a non-secure pathway handles user-initiated captures such as photos and videos. A trusted execution environment may control routing between these pathways and manage privacy indicators. For instance, when a camera operates in a secure mode for spatial mapping, no privacy indicator activates (e.g., because the data never reaches user-accessible storage). When the same camera captures a photo at user request, the trusted execution environment may route data through the non-secure pathway and activate a visible indicator.

The techniques and circuits described herein protection against software-based attacks on sensor privacy, since the hardware enforcement cannot be circumvented by compromised operating systems or applications. The atomic nature of mute operations prevents race conditions during state transitions that might otherwise leave sensors partially enabled. The isolated processing pathways allow devices to perform background sensing operations for features like gesture recognition while maintaining user trust that such data remains protected from unauthorized access. The hardware-coordinated privacy indicators provide accurate status information that reflects actual sensor operation rather than software-reported states that could be falsified.

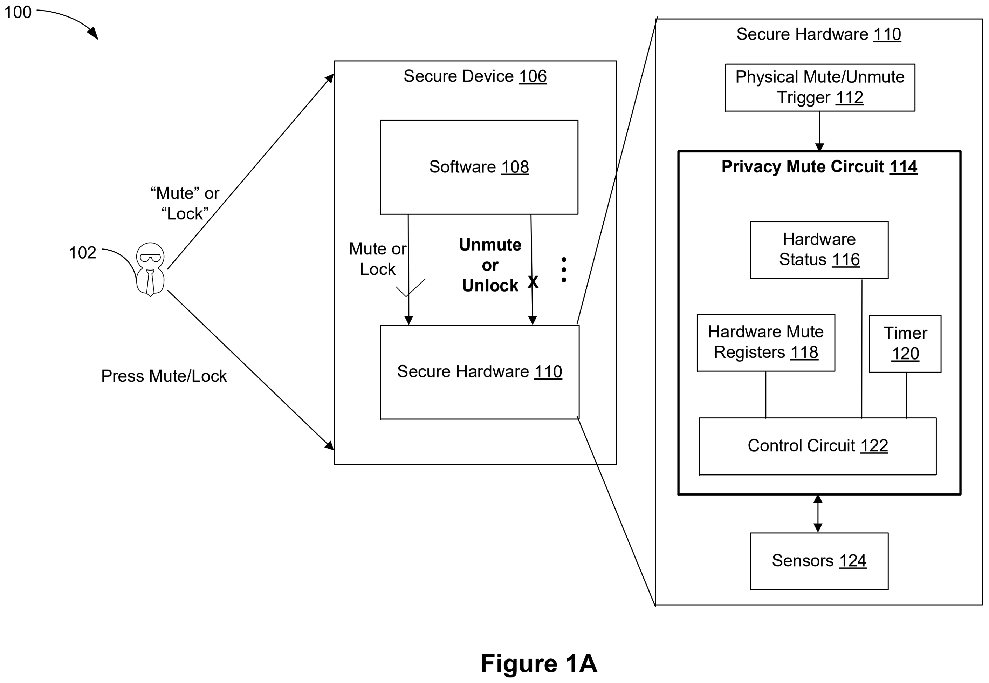

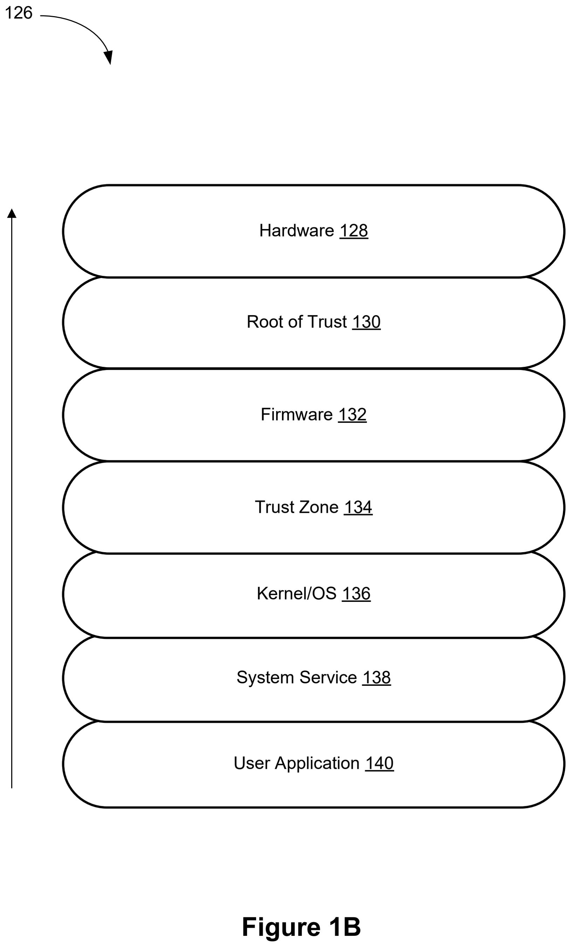

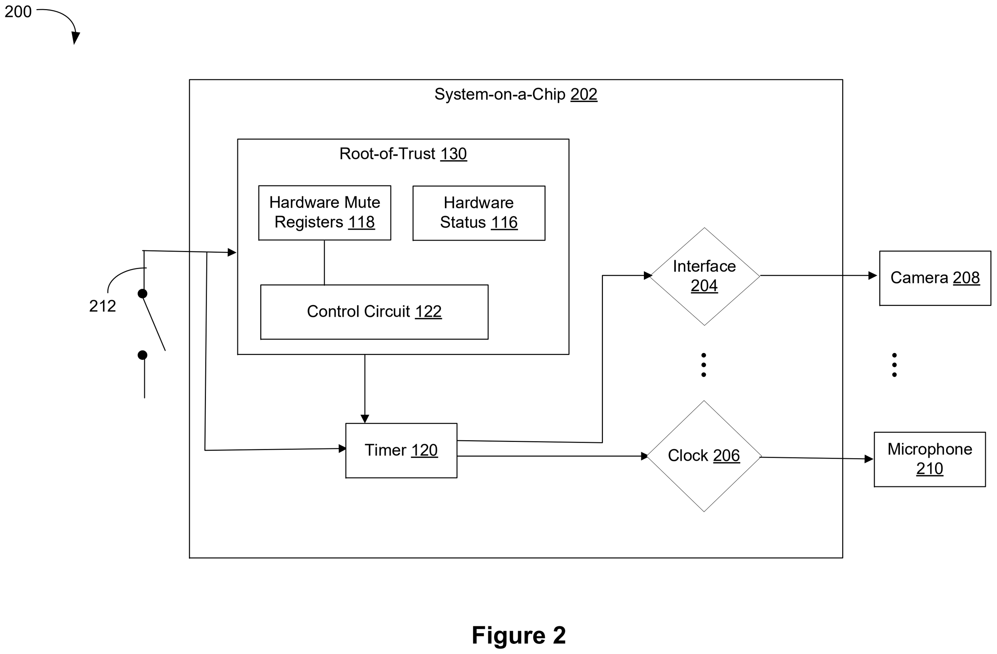

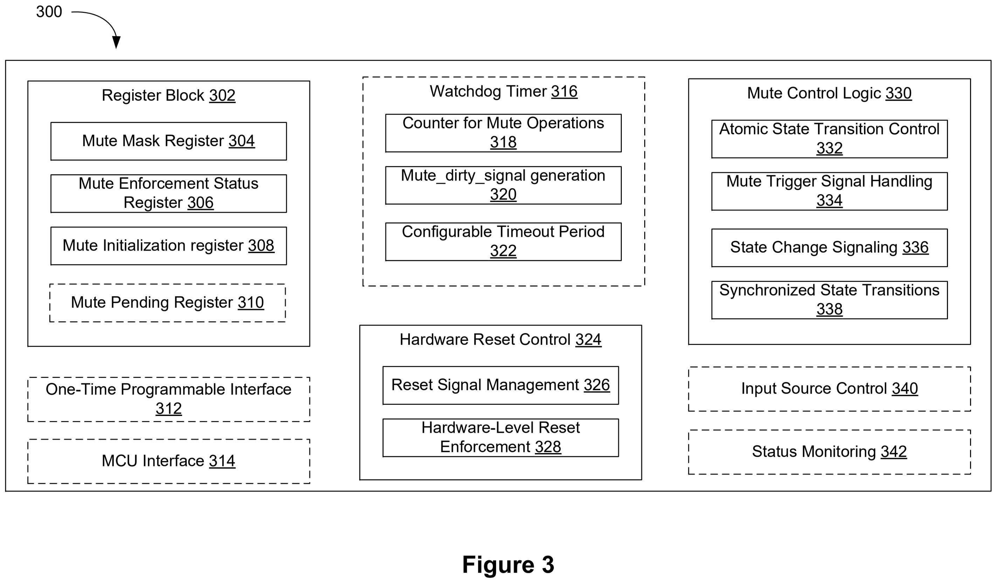

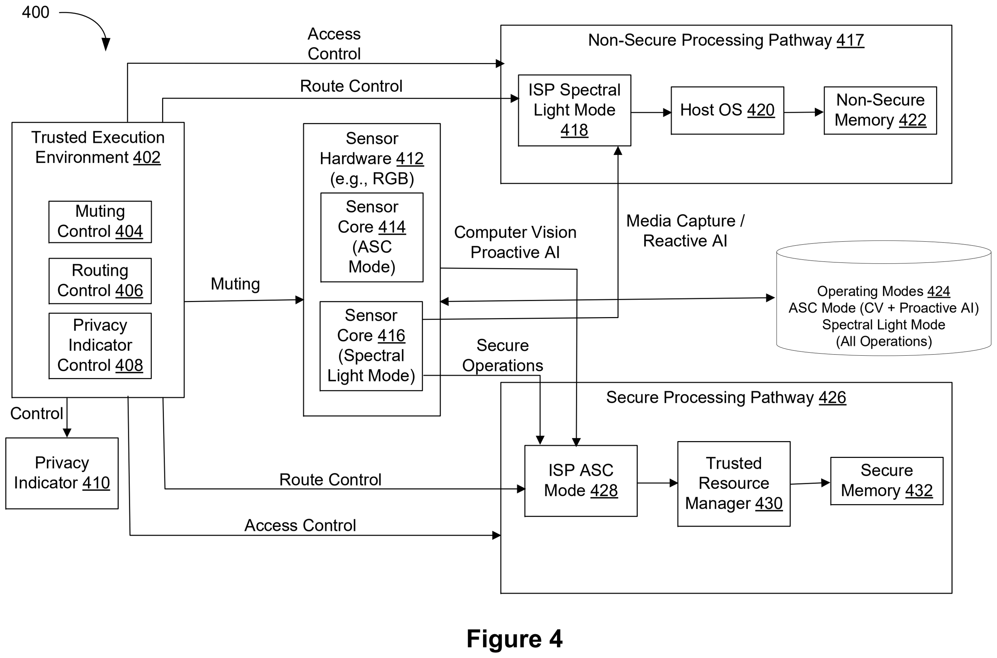

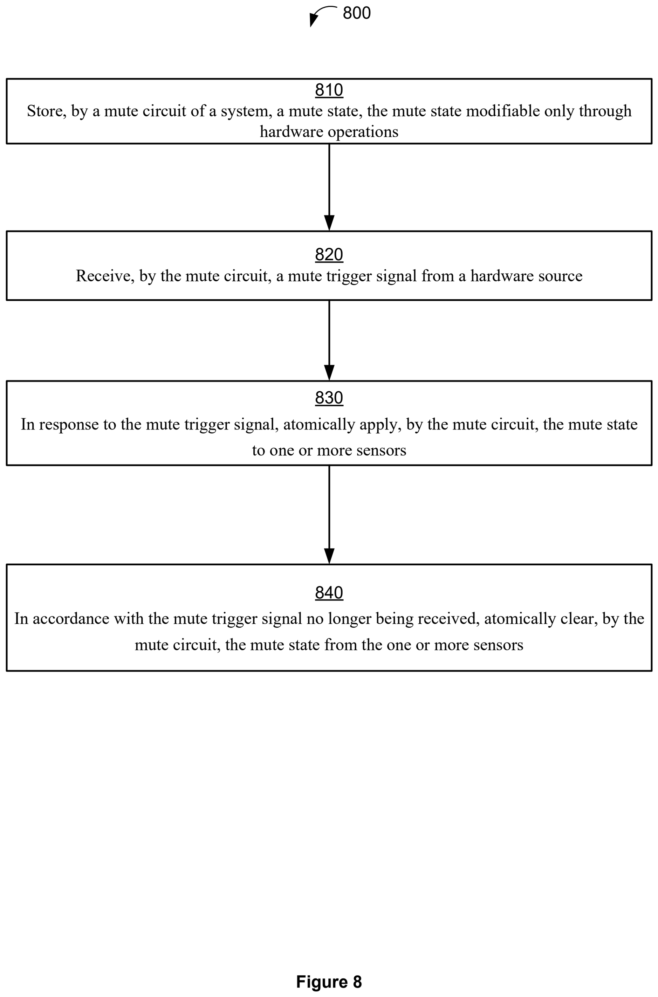

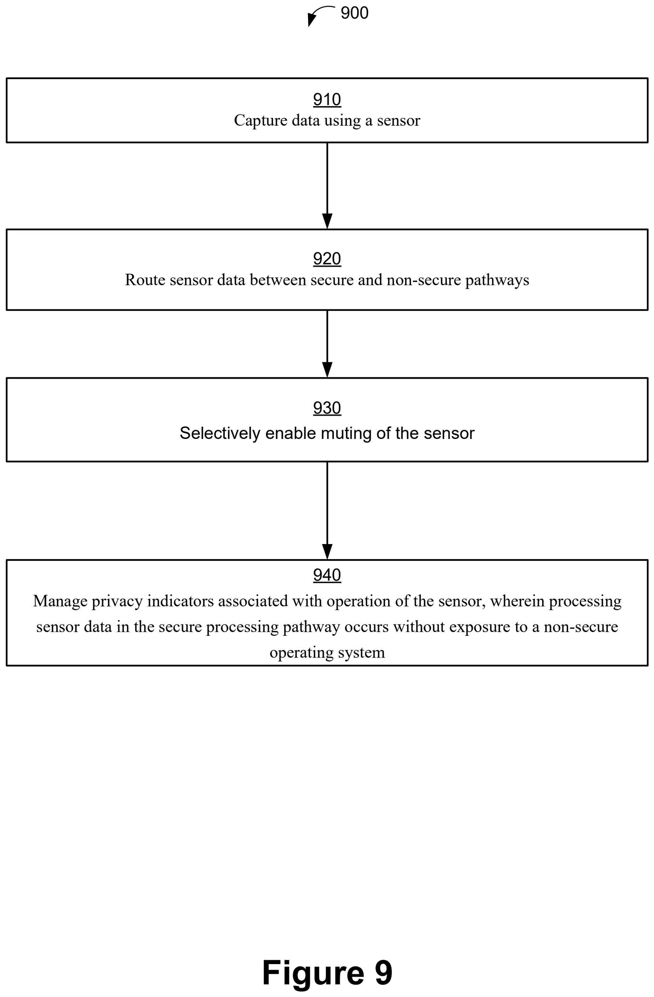

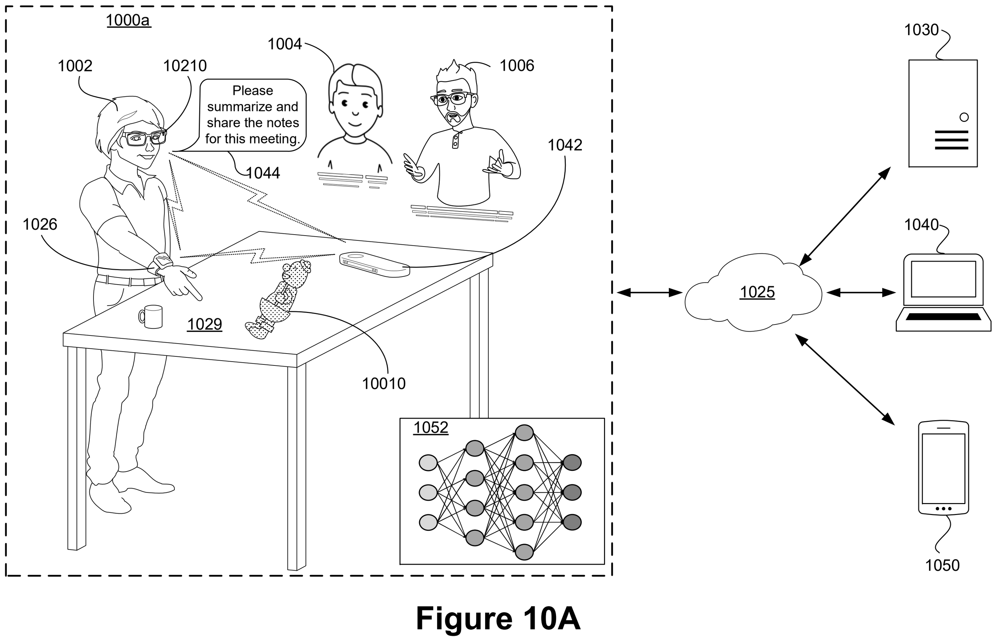

The following detailed description begins with an overview of extended-reality systems and the various hardware and software components that may be used in conjunction with the disclosed privacy mechanisms. The description then addresses privacy mute mechanisms, explaining the challenges of sensor privacy in modern smart devices and introducing the hardware-enforced approach that integrates privacy controls directly into a system-on-a-chip. Figures 1A and 1B illustrate the system architecture and trust hierarchy, while Figure 2 shows a hardware implementation and Figure 3 depicts the privacy mute circuit architecture. The description proceeds to detail example mute flows and the operation of the hardware privacy mute circuit, including register structures and signal handling. The disclosure then describes a sensor architecture with isolated processing pathways, with Figures 4 through 7 illustrating secure sensor systems, data flow architectures, and hardware-level implementations. Example secure sensor systems are described along with various operational modes and security policies. Building upon the hardware-enforced privacy mechanisms and secure sensor architectures described in the preceding sections, Figures 8 and 9 present method flow charts for mute circuit operation and secure sensor operation. The description concludes with example extended-reality systems illustrated in Figures 10A through 10C-2, demonstrating how the disclosed privacy mechanisms and secure sensor systems may be implemented within augmented reality and mixed reality devices, including integration of artificial intelligence with these systems.

Numerous details are described herein to provide a thorough understanding of the example embodiments illustrated in the accompanying drawings. However, some embodiments may be practiced without many of the specific details, and the scope of the appended claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as MR and AR systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) SoC controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO2) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Privacy Mute Mechanisms

Modern smart devices, including augmented reality glasses, virtual reality headsets, and smart speakers, increasingly rely on always-on sensors that can capture data in private and semi-private spaces. These devices present unique security and privacy challenges, as they often incorporate multiple sensors for environmental processing and may be permanent fixtures in homes or carried everywhere users go. The risks from malware and applications with excessive permissions make it crucial to provide users with direct control over sensor privacy. As described above, traditional approaches to sensor privacy have proven inadequate. Simply cutting power to sensors can cause voltage spikes, potentially destabilize shared power systems, or prove ineffective due to voltage bleed from clock signals. Attempting to disable data flow by gating multiple data buses increases complexity and can cause unintended side-effects, such as interrupting firmware operations. Even solutions using external programmable controllers become impractical in constrained form factors like AR glasses, where space limitations prevent the use of extensive external control circuitry. A more effective approach integrates privacy controls directly into the SoC, where internal routing through an uninterruptible timer and root-of-trust can provide clean, smooth sensor disable operations. Rather than attempting to disable sensors externally, the techniques described herein can be used to, for example, hold the components (e.g. physical layer (PHY) receivers) to which sensors (e.g., cameras, microphones, heart-rate monitors, and any other suitable component that collects data) directly connect, in reset and/or any equivalent state within the SoC itself. This approach to implement internal control can help achieve robust privacy control while requiring significantly less space than external control solutions.

A PHY, or physical layer interface, is a hardware component that handles the physical transmission and reception of data signals between devices, converting digital data into electrical or optical signals for communication over a physical medium. C-PHY is a specific type of PHY interface defined by the MIPI Alliance that uses three-wire signaling for high-speed data transmission, e.g., for connecting image sensors and cameras to application processors in mobile and embedded devices.

Figure 1A illustrates an example secure hardware-enforced sensor privacy system architecture 100, according to some embodiments. In some embodiments, the architecture 100 provides tamper-resistant privacy controls for electronic devices. The architecture 100 addresses the security challenge of providing sensor privacy in a manner that cannot be compromised through software vulnerabilities or malicious code, while providing clear status feedback and atomic operation guarantees. A user 102 is shown interacting with a secure device 106. Examples of the secure device 106 include AR glasses, an AR headset, a smart watch, a storage unit, and any other appropriate electronic device. The devices may have different input/output modalities, capabilities, and/or interfaces, as discussed below with reference to Figures 10A-10C. For example, a storage unit may only include a physical reset button, whereas the AR glasses, smart watch, or AR headsets can include different types of user input modalities. These user modalities can include touchscreens, physical buttons, microphones (e.g., for detecting voice commands), and/or other input mechanisms. Consumer devices, such as the augmented reality devices and smart watches, utilize a wide array of sensors including inertial measurement units (IMUs), neuromuscular sensors, time-of-flight sensors, structured light sensors, thermal cameras, and environmental sensors for temperature, humidity, and air quality. These sensors enable advanced functionalities such as object recognition, gesture-based interactions, spatial awareness, and environmental monitoring, enhancing the overall user experience and device capabilities. The interfaces described above allow a user to initiate mute or lock commands directed to the sensors. The secure devices described herein can implement a hardware-enforced security architecture (e.g., the architecture 100) that ensures privacy controls remain effective even if device software is compromised.

In some embodiments, the secure device 106 includes software 108 that can process mute/lock requests but cannot issue unmute/unlock commands. This one-way restriction is enforced by a secure hardware 110. The secure hardware 110 may implement several security features. A physical mute/unmute trigger 112 provides the hardware-level input pathway through a direct electrical connection (e.g. a GPIO pin), physically isolating it from software interfaces. In some embodiments, this trigger includes electrical isolation circuitry to prevent signal tampering. The privacy mute circuit 114 coordinates the overall muting operation and implements atomic state transitions that cannot be interrupted or partially completed. Hardware status 116 maintains the current state and provides trustworthy status information through a mute enforcement status register configured to store the current mute enforcement status. In some embodiments, the hardware mute registers 118 implement one-way state storage (e.g. by using write-1-to-set operations and/or any other appropriate operations) that physically prevent software from clearing privacy settings. In some embodiments, these registers include a mute mask register that can only be modified through specific operations (e.g. write-1-to-set operations and/or any other appropriate operations) and retains its value through software reset operations, clearing only during hardware reset events.

In some embodiments, a hardware timer 120 functions as an uninterruptible timer that starts counting upon initiation of a mute operation and generates a failure signal (e.g. a dirty signal, a mute_dirty_done signal, or any equivalent signal) if the operation does not complete within a predetermined time (e.g., milliseconds to a few seconds). In some embodiments, the timer coordinates with multiple microcontroller units to ensure synchronized mute state transitions across subsystems. The control circuit 122 provides fine-grained management of sensors 124 through hardware-level reset control. In some embodiments, the control circuit accepts only one active trigger input source at a time based on one or more enable bits, masking all other trigger input sources until the next hardware reset. In some embodiments, the circuit loads initial configuration values from one-time programmable memory including trigger input source selection, initial mute state values, and timer threshold values. The sensors 124 can include distinct types of input devices, such as cameras, microphones, and other environmental sensors. The system implements atomic muting operations that prevent partial unmuting of individual sensors, and in some embodiments, requiring synchronized state transitions across all active sensors. This hardware-enforced architecture provides a solution to the security limitations of software-based privacy controls. In some embodiments, by implementing atomic operations, one-way state storage, hardware timing enforcement, and coordinated sensor control at the hardware level, the system maintains its security properties even if device software is compromised or malicious code attempts to override privacy settings.

Figure 1B shows an example trust hierarchy 126, according to some embodiments. The secure device architecture shown in Figure 1A can be further understood through the trust hierarchy in Figure 1B. According to some embodiments, the software component 108 can include multiple layers with user applications 140 at the top level, which are considered untrusted and have the least privileges. System services 138 provide controlled access to system resources, while kernel/OS 136 manages core system operations with elevated privileges. These software components shown in Figure 1A can initiate mute operations but are prevented from performing unmute operations through hardware-enforced controls. The secure hardware component 110 depicted in Figure 1A can include several security layers detailed in Figure 1B. At its foundation, the hardware 128 provides immutability and isolation, properties that enable secure boot and protect against software attacks at all privilege levels. A root of trust 130 serves as an immutable anchor for the security architecture, verifying the integrity of boot processes and security operations. A firmware 132 provides low-level system control while being constrained by hardware security measures. A Trust Zone 134 creates isolated execution environments, separating secure and non-secure operations.

This layered architecture implements the security components shown in Figure 1A, with the physical mute/unmute trigger 112, privacy mute circuit 114, hardware status 116, hardware mute registers 118, and control circuit 122 all being anchored in hardware-based security. The trust gradient from hardware to user applications ensures that even if higher-level components are compromised, the hardware-enforced privacy controls remain effective through hardware immutability and isolation. Since immutable systems cannot be updated, the hardware security components are designed to be simple, effective, and easily validated while providing robust protection against software-based attacks.

Figure 2 is a schematic diagram of an example hardware implementation 200, according to some embodiments. The implementation can be understood as a view of the secure hardware-enforced sensor privacy system architecture 100 described above in reference to Figure 1A (the system architecture 100) and Figure 1B (the trust hierarchy 126). Figure 2 illustrates how the high-level security components can be physically implemented within a SoC 202. In some embodiments, the root-of-trust 130, previously shown in the trust hierarchy of Figure 1B, serves as the secure foundation of the system, housing security components including the hardware mute registers 118 and the hardware status 116. In some embodiments, hardware mute registers 188 are components, such as storage units, of a system. These registers maintain the muting state and status information in a tamper-resistant manner as described in further detail below. The control circuit 122 manages the security operations and enforces privacy policies from within the root-of-trust 130. The hardware timer 120, corresponding to the same component shown in Figure 1A, coordinates with the control circuit 122 to ensure atomic muting operations and prevent timing-based attacks. The timer provides uninterruptible sequencing of privacy state transitions.

The SoC 202 interfaces with the sensors 124 (e.g., a camera sensor in a video camera 208, a sensor in a microphone 210) through dedicated hardware interfaces. For example, interface 204 connects to the camera sensor 208, providing a controlled data pathway that can be securely disabled. Similarly, a clock interface 206 connects to the microphone sensor 210, allowing for secure control of sensor timing signals. A physical switch 212, implementing the physical mute/unmute trigger 112 shown in Figure 1A, provides a hardware-level trigger input that initiates muting operations. In some embodiments, physical switch 212 is electrically isolated from software interfaces to prevent programmatic tampering with privacy controls. This architecture ensures that sensor privacy states can only be modified through proper hardware channels, maintaining security even if device software 108 (shown in Figure 1A) is compromised. The system implements atomic operations and hardware-level reset control to provide robust privacy protections for sensor data.

Figure 3 is a block diagram of an example hardware privacy mute circuit architecture 300, according to some embodiments. The architecture 300 expands upon the privacy mute circuit 114 shown in Figure 1A, integrating with the hardware-enforced security features described in Figure 2. The architecture 300 can be used to implement the core privacy enforcement mechanisms through dedicated hardware blocks while providing flexibility for optional enhanced functionality. In some embodiments, register block 302 includes three register components. A mute mask register 304 implements one-way state storage through write-1-to-set operations, physically preventing software from clearing privacy settings. A mute enforcement status register 306 maintains and provides trustworthy status information about the current mute enforcement state. A mute initialization register 308 manages the configuration and initialization of the muting system, including, for example, enable bits for trigger sources and lock bits to prevent unauthorized modifications. In some embodiments, register block 302 is a storage device including memory, and registers 304, 306, and 308 are programs stored in the memory.

In some embodiments, a timer 316 serves as an uninterruptible timing mechanism for mute operations. The timer includes, for example, a counter for mute operations 318 that starts upon initiation of a mute operation, and/or mute_dirty_done signal generation 320 that triggers if operations exceed the configurable timeout period 322, ensuring atomic completion of mute operations. A mute control logic 330 orchestrates the overall muting operations through several key components. An atomic state transition control 332 ensures uninterruptible state changes, while mute trigger signal handling 334 processes hardware trigger inputs. State change signaling 336 manages notifications of state transitions, and synchronized state transitions 338 coordinates changes across multiple subsystems. A hardware reset control 324 manages system-wide reset operations through, for example, reset signal management 326 and/or hardware level reset enforcement 328, ensuring that privacy states can only be modified through proper hardware channels.

In some embodiments, the architecture 300 includes a mute pending register 310 that tracks and/or manages pending mute operations, preventing overlapping state transitions. In some embodiments, a One-Time Programmable (OTP) interface 312 enables initial configuration loading from OTP memory, including trigger source selection and/or timer threshold values. In some embodiments, an MCU interface 314 facilitates coordination with multiple microcontrollers for synchronized mute operations across subsystems. In some embodiments, an input source control 340 manages multiple trigger input sources, including GPIO, virtual wire, hardware-generated requests, and any other suitable input sources. In some embodiments, status monitoring 342 provides additional supervision of mute operations and state transitions, such as logging each time a mute operation occurred or each time a state transition occurred.

In this way, the architecture 300 enables robust privacy enforcement by implementing atomic operations, one-way state storage, and hardware-level timing enforcement, maintaining security properties even if device software is compromised, according to some embodiments. The system supports both essential privacy controls and optional enhanced functionality while preserving the core security guarantees through hardware-based enforcement. The privacy mute mechanism described herein is hardware enforced (e.g., cannot be defeated by software means). Mute entry and exit are atomic operations. The techniques described herein are flexible to adapt to late binding changes in system configuration or privacy policy.

In some embodiments, the privacy mute features are implemented through a set of registers, examples of which are shown and described below. These privacy mute mechanisms implement and expand upon the hardware mute registers 118 shown in Figure 1A, which are housed within the register block 302 of Figure 3, according to some embodiments. The specific register implementations detailed below provide the hardware-level control capabilities introduced in the high-level architecture 100 of Figure 1A and the detailed implementation shown in Figures 2 and 3, according to some embodiments. A MUTE MASK register is described below in Table 1, according to some embodiments. The MUTE MASK register can provide the functionality of the mute mask register 304 shown in Figure 3, implementing the one-way state storage mechanism that is important to the hardware-enforced security model shown in Figure 1B's trust hierarchy.

**Table 1**

| Bit name | Bit position | Software access | Reset value | Description |
|---|---|---|---|---|
| enable_mask | 15:0 | Write-1-to-Set (W1S) - a register access mode | 0x0 | Mute enforcement mask, write-1-to-set, values reset only during hardware (HW) external reset event |

A MUTE ENFORCEMENT STATUS register is described below in Table 2, according to some embodiments. This MUTE ENFORCEMENT STATUS register can be used to implement the status reporting functionality shown as hardware status 116 in Figure 1A and expanded in the mute enforcement status register 306 in Figure 3.

**Table 2**

| Bit name | Bit position | Software access | Reset value | Description |
|---|---|---|---|---|
| status | 15:0 | Read Only (RO) - a register access mode | 0x0 | Current mute enforcement status |

A MUTE INPUT STATE register is described below in Table 3, according to some embodiments. This MUTE INPUT STATE register can be used to implement the input path enabling and disabling functionality as described herein.

**Table 3**

| Bit name | Bit position | Software access | Reset value | Description |
|---|---|---|---|---|
| trigger | 0 | RO | 0x0 | Current value of mute trigger from Input/Output (IO)/Virtual Wire (VW)/Clock Management and Reset Tree (CMRT); active low |

A MUTE PENDING register is described below in Table 4, according to some embodiments. This MUTE PENDING register can be used to track and/or manage pending mute operations as expanded in the mute pending register 310 in Figure 3.

**Table 4**

| Bit name | Bit position | Software access | Reset value | Description |
|---|---|---|---|---|
| pending | 0 | Write-1-to-clear (W1C) | 0x0 | Mute event pending, set when mute trigger input changes value, software (SW) needs to write-1-to-clear |

A MUTE INIT register is described below in Table 5, according to some embodiments. This MUTE INIT register can be used to manage the configuration and initialization of the muting system as expanded in the mute initialization register 308 in Figure 3.

**Table 5**

| Bit name | Bit position | Software access | Reset value | Description |
|---|---|---|---|---|
| mute_n_enable | 0 | Read-Write (RW) (with lock) | 0x0 | Enable bit for trigger: mute_n, active-high, when set by Boot Microcontroller Unit (BMCU), HW will react to the incoming trigger events from this source |
| mute_remote_n__enable | 1 | RW (with lock) | 0x0 | Enable bit for trigger: mute_remote_n, active-high, when set by BMCU HW will react to the incoming trigger events from this source |
| mute_cmrt_n__enable | 2 | RW (with lock) | 0x0 | Enable bit for trigger: mute_cmrt_n, active-high, when set by BMCU HW will react to the incoming trigger events from this source |
| enable_lock | 28 | Write-1-to-set (W1S) | 0x0 | Mute initialization lock for enable signals, active-high, SW has W1S access, once set HW will suppress any further writes to the mute_init register until next HW reset |
| init_done | 29 | W1S | 0x0 | Mute initialization done, active-high, SW has W1S access, SW must write it after setting and locking enables, once set HW will trigger enforcement based on state of currently enabled inputs |
| mute_n__raw | 0 | RO | 0x0 | Raw state of mute_n input, active-low, raw inputs are masked by enabling logic before contributing to the mute_trigger value |
| mute_remote_n__raw | 1 | RO | 0x0 | Raw state of mute_remote_n input, active-low, raw inputs are masked by enabling logic before contributing to the mute_trigger value |
| mute_cmrt_n__raw | 2 | RO | 0x0 | Raw state of mute_cmrt_n input, active-low, raw inputs are masked by enabling logic before contributing to the mute_trigger value |

The above register implementations can be used to provide the hardware-level control mechanisms shown in the control circuit 122 of Figure 1A and Figure 2 and expanded in the mute control logic 330 of Figure 3, according to some embodiments. The initialization settings, particularly those controlling mute triggers and enable bits, implement the security controls important to maintain the trust boundaries illustrated in Figure 1B's trust hierarchy.

According to some embodiments, inputs for privacy mute flow include, for example:
- a success signal (e.g. a clean signal, a mute_clean_done signal, or any equivalent signal), which is signaled from CMRT via its outgoing interrupt block. The success signal goes to mute enforcement HW and connects to BMCU as interrupt request (IRQ).
- a failure signal, which is generated on mute timer (WDT) expiry/Bite event.
- a mute change signal (e.g. a mute_irq signal or any equivalent signal), which is generated when mute trigger changes state and the mute_irq is not already active. Mute trigger changes are ignored while mute_irq is active.

These mute flow signals can be used to implement the atomic state transition control 332 and mute trigger signal handling 334 shown in Figure 3, thereby ensuring proper coordination between hardware components while maintaining the security properties described above in reference to Figure 1A.

### Example Mute Flow

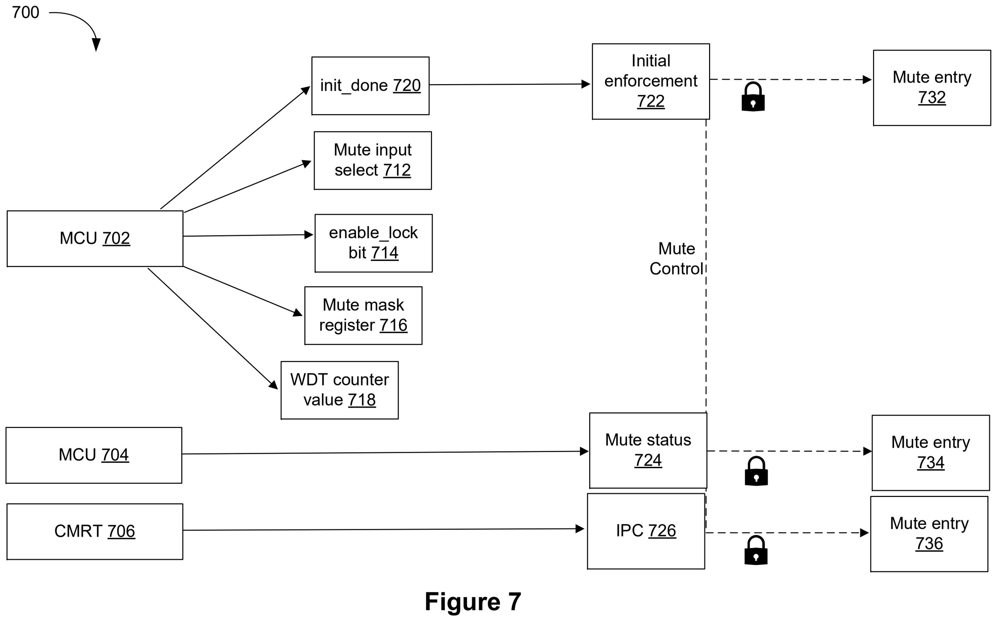

Referring to Figure 7, in some embodiments, for initialization, at boot, MCU 702 (e.g. a BMCU) sets the mute input select 712 to keep one of the input paths enabled and disable the other two. This selection may be performed by MCU 702 as a function of strap pins and OTP values (OTP address to be defined in BROM spec). For example, the three input paths may be: GPIO (mute_n), virtual wire (mute_remote_n) and CMRT generated request (mute_cmrt_n). In some embodiments, the initialization includes MCU 702 setting the enable_lock bit 714 which disables further updates to the input selection. In some embodiments, MCU 702 sets the mute mask register 716, because register is W1S it does not need special protections since firmware (FW) can only add to the mask and cannot reset bits (e.g., the bits only reset at hardware (HW) reset event). The mute mask value may be a function of strap pins and OTP values (OTP address to be defined in BROM spec). In some embodiments, MCU 702 sets the initial WDT counter value 718 (a safe default configuration is hardcoded in the ROM, or optionally this default may be overridden via an OTP alternative). The WDT counter value 718 may come from OTP (OTP address to be defined in BROM spec). In some embodiments, MCU 702 sets init_done 720.

In some embodiments, after the initialization (e.g., after init_done 720 is set), the hardware starts initial enforcement as a function of selected input. For example, if the state of selected input is to mute, mute is silently entered (e.g., mute mask is driven without generating an IRQ to MCU 702, MCU 704 (e.g. a System Management Control Unit (SMCU)), or CMRT 706). To continue with the mute flow description, the hardware waits for selected mute input to change polarity. In some embodiments, the selected mute input changes polarity from 1 to 0, indicating a mute entry (e.g., 732, 734, and 736). In some embodiments, the hardware detects value change, sets a Pending bit, flops new value into mute Trigger register, and generates Mute IRQ to all 3 root-of-trust MCUs.

In some embodiments, the system includes MCU 702, MCU 704, and CMRT 706 as components for implementing the hardware-enforced privacy mute functionality. For example, MCU 702 and MCU 704 are microcontroller units that coordinate atomic mute operations across subsystems and enforce synchronized mute state transitions. CMRT 706 is a Clock Management and Reset Tree component that generates hardware requests for mute trigger signals and communicates with other subsystems via inter-process communication during mute flow operations. These components work together to ensure that mute entry and exit operations are performed atomically and that all participating subsystems respond appropriately to mute state changes within the timing constraints enforced by the hardware timer.

In some embodiments, the functions performed by MCU 702 and MCU 704 are implemented using alternative processing units such as digital signal processors (DSPs), field-programmable gate arrays (FPGAs), application-specific integrated circuits (ASICs), or other programmable logic devices capable of coordinating atomic operations and enforcing synchronized state transitions. Similarly, the clock management and reset tree functionality provided by CMRT 706 may be implemented using dedicated clock management integrated circuits, power management integrated circuits with reset control capabilities, or custom hardware logic blocks that generate hardware requests and manage inter-process communication for mute flow operations. In some embodiments, a single system-on-chip controller integrates the functionality of multiple MCUs and/or the CMRT into a unified processing architecture. In some embodiments, the coordination of atomic mute operations is distributed across a combination of hardware state machines, firmware-controlled processors, and dedicated interrupt controllers that collectively ensure proper sequencing and timing of mute state transitions across all participating subsystems.

In some embodiments, MCU 702, MCU 704 and CMRT 706 start their mute flows. In some embodiments, the MCU 702 mute flow comprises initial enforcement 722 (e.g. clears and starts Mute WDT). In some embodiments, the CMRT 706 mute flow comprises communicating mute states (e.g. initializes inter-process communication (IPC) 726 to other subsystems that participate in mute flow to start mute). In some embodiments, subsystems responded to IPC 726 before mute WDT expiry, issue a success signal. If at least one subsystem did not respond to IPC 726 before mute WDT expiry, some embodiments perform remediation, which may be defined in software architecture. MCU 704 informs high-level operating system (HLOS) about mute status change (e.g., asserts a failure signal or a success signal). Hardware drives the output mute vector mute_mode_enforce to the pre-set mute mask. In some embodiments, the output mute_mode_enforce is also captured in a CMRT 706 and MCU 704 readable CSR. In some embodiments, MCU 702 pauses WDT and clears the Pending bit to clear mute_irq forcing the sequence state back to hardware waiting for selected mute input to change polarity.

In some embodiments, selected mute input changes polarity from 0 to 1, which indicates mute exit. Hardware detects value change, sets the Pending bit, flops new value into mute Trigger register, and generates Mute IRQ to MCUs. In some embodiments, hardware automatically clears mute_mode_enforce to 0. MCU 702, MCU 704 and CMRT 706 start their Unmute flows. CMRT communicates IPC 726 to other subsystems that participate in mute flow to end mute. In some embodiments, MCU 704 informs HLOS about mute status change. In some embodiments, MCU 702 clears mute the Pending bit to lower the mute_irq forcing the sequence state back to hardware waiting for selected mute input to change polarity.

### Example Hardware Privacy Mute Circuit

In some embodiments, the hardware privacy mute circuit 114 stores an enforced mute state through hardware-only operations. The circuit receives mute trigger signals from hardware sources, including GPIO, virtual wire, or hardware-generated requests. Upon activation of these trigger signals, the circuit atomically applies the enforced mute state to disable sensors 124. Upon deactivation, it atomically clears the state to enable the sensors.

In some embodiments, the timer 120 starts counting when a mute operation begins. If the operation exceeds its predetermined time, the timer generates a timeout (e.g., a mute_dirty_done) signal.

In some embodiments, the hardware privacy mute circuit 114 applies the enforced mute state in response to either a timeout signal (e.g., the mute_dirty_done signal) or a complete signal (e.g., a mute_clean_done signal) that indicates successful completion.

In some embodiments, the mute pending register 310 sets and maintains a pending bit when the mute trigger signal changes state. Software must clear this bit. During this pending state, the circuit ignores subsequent trigger signal changes.

In some embodiments, the initialization registers 308 stores raw state bits for unmasked states of GPIO inputs, virtual wire inputs, and hardware-generated requests.

In some embodiments, when an initialization done bit sets, the circuit enters a mute state based on the initial state of enabled trigger inputs without generating an interrupt.

In some embodiments, the enforced mute state persists through software reset operations. Only hardware reset operations clear this state.

In some embodiments, multiple MCUs coordinate atomic mute operations across subsystems using predetermined mute sequences, enforcing synchronized mute state transitions.

In some embodiments, the mute control logic 330 accepts one active trigger input source at a time based on enable bits stored in registers. The mute control logic 330 masks all other trigger input sources until the next hardware reset.

In some embodiments, the OTP interface 312 loads initial configuration values including trigger input source selection, initial mute state values, and timer threshold values. Once the enable lock bit sets, this configuration becomes immutable.

In some embodiments, each bit in the enforced mute state controls muting for a specific sensor type according to initialization register settings. The atomic state transition control 332 requires simultaneous clearing of all active enforced mute state bits during unmute operations, preventing partial unmuting of individual sensors.

In some embodiments, the mute mask registers 304 holds the mute enforcement mask, accepting only write-1-to-set operations.

In some embodiments, the mute enforcement status registers 306 maintains the current mute enforcement status.

In some embodiments, the mute initialization registers 308 contains enable bits for different trigger input sources, an enable lock bit preventing modifications until hardware reset, and an initialization done bit that activates mute enforcement based on enabled trigger inputs.

In some embodiments, hardware sources for trigger signals include physical inputs through GPIO, virtual wire connections, or internally hardware-generated requests. For example, in Figure 2, the physical switch 212 implements a GPIO-based trigger input, while internal hardware signals route through the control circuit 122 within the root-of-trust 130.

### Example Sensor Architecture with Isolated Processing Pathways

As described previously, traditional sensor architectures can expose sensitive sensor data to security vulnerabilities by routing all data through a common pathway controlled by the main operating system. Additionally, privacy indicators often fail to accurately reflect sensor operation states due to lack of hardware-level coordination. Described herein is a solution that separates sensor processing into secure and non-secure pathways, controlled by a trusted execution environment that maintains strict security boundaries while enabling both protected and user-accessible operations.

Figure 4 shows a block diagram of an example secure sensor system 400, according to some embodiments. A trusted execution environment 402 manages control functions: muting control 404 for sensor enablement, routing control 406 for data path management, and privacy indicator control 408 that coordinates with a privacy indicator 410 to provide accurate sensor operation status. A sensor hardware 412 includes sensor cores. A sensor core 414 operates in a first mode (e.g. an always-sensing camera (ASC) mode) for secure operations, and a sensor core 416 operates in a second mode, distinct from the first mode, (e.g. spectral light mode) for additional functionality. In some embodiments, spectral light mode is an intermediate power mode that utilizes an application processor CPU and an image signal processor (ISP) along with DDR memory and PCIe interfaces, e.g., enabling secure sensor data processing with HLOS software running on the application processor CPU while maintaining a secure data path from the sensor through the ISP to LLC/DDR and PCIe. In some embodiments, spectral full mode is a full-power operational mode that similarly utilizes the application processor CPU, ISP, DDR memory, and PCIe interfaces, but supports the complete range of sensor operations including both secure computer vision processing and non-secure user-initiated media capture operations such as photo capture, video capture, streaming, and video calling. In the example of Figure 4, these cores feed into two distinct processing pathways. A non-secure processing pathway 417 includes image signal processing in a first ISP mode 418 (e.g. spectral light mode or spectral full mode), connecting to host OS 420 and non-secure memory 422. This pathway handles media capture and reactive AI operations. A secure processing pathway 426 processes computer vision and proactive AI operations through ISP in a second ISP mode 428, distinct from the first ISP mode 418 (e.g. ASC mode), routing through a trusted resource manager 430 to secure memory 432. The operating modes 424 define distinct operational states, for example: ASC mode for computer vision and proactive AI, spectral light mode for intermediate processing operations, and spectral full mode supporting all operations including media capture. The trusted execution environment 402 maintains control through multiple mechanisms, for example: route control directs data flows, access control manages security boundaries, and muting selectively enables or disables sensor operations. This architecture ensures secure data handling while allowing certain non-secure operations under controlled conditions.

The secure sensor system 400 can be implemented in addition to, or instead of, the hardware muting mechanisms described above in reference to Figures 1-3, according to some embodiments. For example, building upon the trust hierarchy shown in Figure 1B, where components are arranged from hardware 128 through user applications 140, the architecture described in reference to Figure 4 can be used to implement this security gradient through isolated processing pathways. While Figure 1B establishes the conceptual trust boundaries from hardware through firmware, trusted zone, and software layers, Figure 4 implements these boundaries through physical separation of processing pathways. For example, the trusted execution environment 402 implements Trust Zone 134 concepts through strict hardware-enforced boundaries between secure and non-secure operations, while the separation of pathways into secure processing pathway 426 and non-secure processing pathway 417 mirrors the trust gradient from root hardware through user-accessible applications.

Additionally, or alternatively, building upon the hardware muting mechanisms shown in Figure 2, where sensors are controlled through interfaces (e.g. PHY and clock interfaces) under root-of-trust supervision, Figure 4 architecture can expand this concept by implementing complete processing pathway isolation. While Figure 2 focuses on the hardware-level muting controls through reset signals, Figure 4 shows how these controls integrate into a broader secure processing architecture. For example, the muting control 404 in the trusted execution environment 402 implements the hardware-level sensor control capabilities shown in Figure 2's root-of-trust 130 by extending them with pathway-specific muting that can selectively disable non-secure operations while maintaining secure ones. The hardware-level security controls from Figure 2 can serve as a foundation for the broader secure processing architecture shown in Figure 4, according to some embodiments.

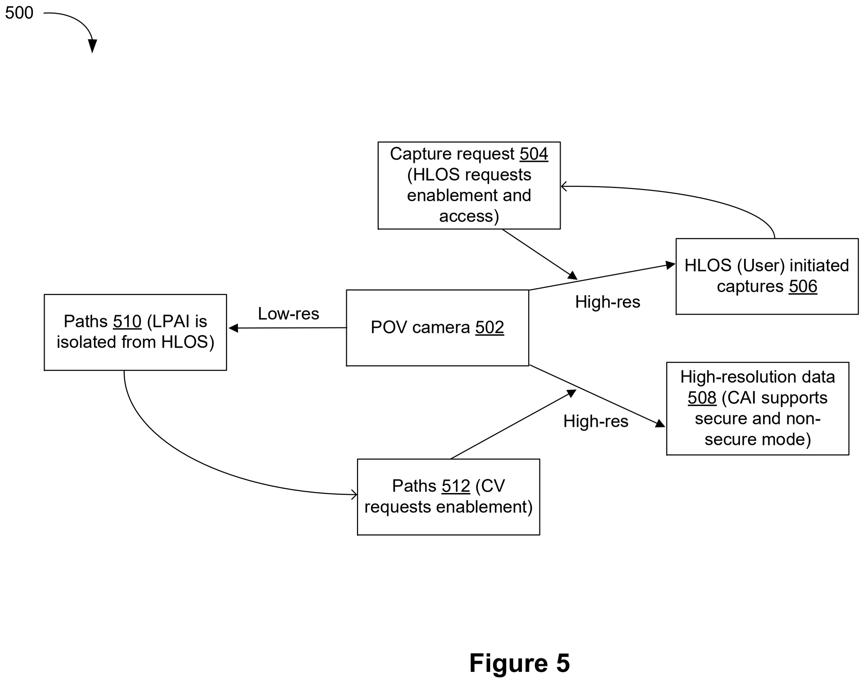

Building upon the trust hierarchy of Figure 1B and the pathway isolation shown in Figure 4, Figure 5 illustrates an example sensor data flow architecture 500, according to some embodiments. The flow architecture 500 implements privacy-focused security controls through hierarchical trust domains. A Point of View (POV) camera 502 integrates with both secure and non-secure pathways while enforcing trust boundaries between domains. At the system level, when users initiate capture requests 504, a High-Level Operating System (HLOS) (e.g., the OS 136) must obtain permission through one of two paths. Either HLOS directly approves and signals the security chip to activate indicators (e.g., LED indicators) for user-initiated captures 506, or a Trusted Virtual Machine (TVM) handles approval with enhanced privacy controls. This maps to the trust gradient shown in Figure 1B, with HLOS operating at a lower trust level than protected domains like TVM, hardware processors, which may include digital signal processing (DSP), artificial intelligence (AI), and/or application processors (AP).

Some embodiments include following camera uses on RGB:
- RGB for computer vision (CV): This use case can be run without the user's demand. This case may be run in three modes of camera: ASC mode, spectral light mode, and spectral full mode. This case needs to be secure.
- RGB for media capture: This use case category is run with user's demand. This case includes, for example, photo capture, video capture, streaming, and video calling. This case runs in spectral full mode. This case may not need to be secure as it is user triggered.
- RGB for contextual AI: This use case can be run with user's demand (reactive) or without user's demand (proactive). This use case runs in ASC mode (proactive) and in spectral full mode (proactive and reactive). Reactive may not need to secure, proactive needs to be secure.
- Concurrent use cases: RGB as CV is running most of the time. This use case can be run concurrently with RGB for media capture and with RGB for contextual AI (all three use cases concurrently).

Table 6 below illustrates example camera modes and use cases, according to some embodiments.

**Table 6**

| Use Cases | Modes | HW used | Firmware / HLOS SW used | Secure camera? (Y/N) | Secure Data Path | Affected by Mute | Privacy Indicator (e.g., LED) |
|---|---|---|---|---|---|---|---|
| RGB for CV | ASC mode (Low Power AI (LP AI)) | ASC Sensor Core, ASC-ISP, DDR, PCIe | FW in ASC Sensor Core; HLOS SW in AP CPU; | Y | Sensor → ASC-ISP → TRM → LLC/DDR → PCIe | No (VM still need to be able to receive secure buffer) | OFF |
| | spectral light mode | AP CPU, ISP, DDR, PCIe | HLOS SW in AP CPU | Y | Sensor → ISP → LLC/DDR → PCIe | Yes | OFF |
| | spectral full mode | AP CPU, ISP, DDR, PCIe | HLOS SW in AP CPU | Y | Sensor → ISP → LLC/DDR → PCIe | Yes | OFF |
| RGB for media capture | spectral full mode | AP CPU, ISP, DDR, PCIe | HLOS SW in AP CPU | N | N/A (no need for secure pipeline) | Yes | ON |
| RGB for CAI | ASC mode | ASC SensorCore , ASC-ISP, eNPU | FW in ASC SensorCore ; HLOS SW in AP CPU; | Y | Image frame only consumed by eNPU inside ASC. | No | OFF |
| | spectral full mode | AP CPU, ISP, DDR, HTP | HLOS SW in AP CPU | Reactive: N; Proactive : Y; | Proactive: Sensor → ISP (Image Front End (IFE)) → LLC/DDR → ISP (BPS/IPE) → HTP | Reactive: Yes; Proactive : No; | Reactive: ON Proactive : OFF |

Referring to Figure 5, in some embodiments, low-resolution data flows from a POV camera 502 through three possible paths 510 (e.g. GPIO, virtual wire, or a hardware-generated request). In some embodiments, low-resolution data comprises image data having a resolution at or below a threshold resolution (e.g., 640x480 pixels, 720p, or 1 megapixel), image data having a frame rate at or below a threshold frame rate (e.g., 15 frames per second or 30 frames per second), and/or image data suitable for computer vision processing tasks such as object detection, gesture recognition, or spatial mapping. In one path, advanced computer vision on computing platform (CP) flows over virtualized Peripheral Component Interconnect Express (PCIe). Advanced computer vision (CV) passes over non-virtualized PCIe, or basic processing in Low Power AI (LPAI). Virtualized PCIe provides stronger isolation between secure and non-secure domains, similar to the pathway separation shown in Figure 4 between secure processing pathway 426 and non-secure pathway 417. For high-resolution data 508, where data that is high-resolution comprises data that is a higher resolution than low-resolution data, processing options include HLOS/TVM using Advanced Processor Camera Analysis Engine (AP-CAE), or CP processing over either non-virtualized PCle or standard PCIe. In some embodiments, high-resolution data comprises image data having a resolution above a threshold resolution (e.g., 1080p, 4K, 8 megapixels, or 12 megapixels), image data having a frame rate above a threshold frame rate (e.g., 60 frames per second or 120 frames per second), and/or image data suitable for media capture operations such as photo capture, video recording, video streaming, or video calling. When data persistence is required, the LED indicator provides user notification. The CV enablement path 512 mirrors this dual-approval structure, with TVM approval providing enhanced privacy controls.

The architecture incorporates multiple security mechanisms that reflect the trust boundaries established in Figure 1B. For example, PCIe virtualization isolates processing domains, LPAI maintains separation from HLOS, and the Camera Analysis Engine supports both secure and non-secure modes, similar to the dual-mode sensor cores shown in Figure 4 (414, 416). This multi-layered approach favors TVM-controlled operations and virtualized PCIe implementations to maintain robust privacy protection while enabling important functionality.

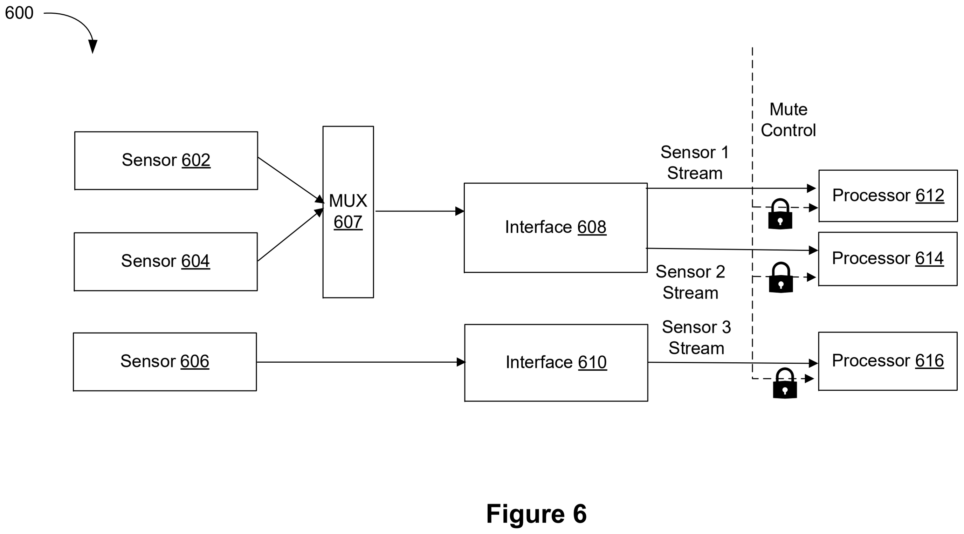

Figure 6 is a schematic diagram of an example hardware-level implementation 600 of a secure sensor architecture, according to some embodiments. Figure 6 illustrates how the conceptual pathway separation from Figure 4 can be realized through physical interfaces and muting controls. This implementation demonstrates a practical approach to maintaining security boundaries while enabling both secure and non-secure operations. Multiple sensor inputs (sensor 602 and sensor 604) share a multiplexed path through multiplexer (MUX) 607, while sensor 606 (e.g., an AR camera or any other type of camera) has a dedicated pathway. These sensors correspond to the sensor hardware 412 shown in Figure 4, capable of supporting different operational modes. The sensor streams are routed through physical layer interfaces 608 and 610 (e.g. one or more PHY), which provide the hardware for implementing the secure and non-secure processing pathways described in Figure 4 (e.g., 426 and 417). At the boundary between interfaces 608 and 610 and processors 612, 614, and 616 (e.g. IFE processors) (e.g., spectral Image Signal Processor (ISP)), mute control points are implemented. These mute controls provide the hardware-level mechanism for the selective muting capabilities described in Figure 4's muting control 404. Mute can be controlled by TZ (Trust Zone) 134, for example. The TZ 134 can provide the security context, controlling the mute points (lock symbols) shown at each stream interface in Figure 6. In some embodiments, each interface 608 and 610 can independently control muting, selectively mute data going to non-secure processing while allowing secure processing to continue. This maps to the dual pathway concept shown in Figure 4 (secure pathway 426 vs non-secure pathway 417). In some embodiments, privacy can include need per-port (from secure to non-secure) notification. For example, each sensor stream crossing between interfaces 608 and 610 and processors 612, 614, and 616 represents a port. The system needs tracks and notifies when data transitions between secure and non-secure domains. The lock symbols at each stream interface can correspond to these control/notification points.

The architecture shown in Figure 6 enables the trusted execution environment 402 (Figure 4) to implement security policies by controlling the mute points at each sensor stream crossing. For example, when processing secure computer vision operations as shown in Figure 5's flow diagram 500, the system can maintain secure pathway operation while muting non-secure pathways, aligning with the security requirements outlined in both Figures 4 and 5 for maintaining isolated processing domains. The physical separation and muting controls demonstrate how the system enforces security boundaries while supporting the concurrent secure and non-secure operations, particularly the ability to selectively mute sensors for non-secure processing while maintaining secure operations.

### Example Secure Sensor Systems

Some embodiments include a secure sensor system, which includes a sensor (e.g., the sensor hardware 412) configured to capture data, a secure processing pathway (e.g., the secure processing pathway 426) coupled to the sensor, a non-secure processing pathway (e.g., the non-secure processing pathway 417) coupled to the sensor, and a trusted execution environment (e.g., the trusted execution environment 402). The trusted execution environment is configured to control routing of sensor data between the secure and non-secure processing pathways, selectively enable muting of the sensor, and manage privacy indicators associated with operation of the sensor. The secure processing pathway processes sensor data without exposure to a non-secure operating system.

In some embodiments, the sensor includes an image sensor (e.g., an RGB sensor). The secure processing pathway includes a secure image signal processor (e.g., the ISP ASC Mode 428). The non-secure processing pathway includes a non-secure image signal processor (e.g., the ISP spectral light mode 418).

In some embodiments, the trusted execution environment is configured to enable concurrent operation of secure and non-secure processing of sensor data from the sensor. For example, in Figure 4, the trusted execution environment 402 performs access control and route control for both the non-secure processing pathway 417 and the secure processing pathway 426.

In some embodiments, the trusted execution environment is configured to selectively mute the sensor for the non-secure processing pathway while maintaining sensor operation for the secure processing pathway.

In some embodiments, the SoC further includes a privacy indicator (e.g., the privacy indicator 410) controlled by the trusted execution environment. The privacy indicator is activated when the sensor is capturing data for non-secure operations and deactivated when the sensor is capturing data only for secure operations.

In some embodiments, the secure processing pathway includes a neural processing unit (e.g., a neural network hardware within the ISP ASC Mode 428) configured to process the sensor data within a secure domain.

In some embodiments, the trusted execution environment is configured to route sensor data through the secure processing pathway for computer vision operations, route sensor data through the non-secure processing pathway for user-initiated media capture operations, and selectively route sensor data through either pathway for artificial intelligence operations based on whether the operations are proactive or reactive, examples of which are shown and described above in reference to Figure 4.

In some embodiments, the secure processing pathway includes a secure memory region (e.g., the secure memory 432). The non-secure processing pathway includes a non-secure memory region (e.g., the non-secure memory 422) isolated from the secure memory region. For example, the secure processing pathway includes an LLC or DDR memory accessed through a trusted resource manager, and the non-secure processing pathway comprises memory accessed through the host operating system software.

In some embodiments, the trusted execution environment is configured to provide notification of data transitions between secure and non-secure domains on a per-port basis, examples of which are described above in reference to Figure 6.

In some embodiments, the sensor is configurable to operate in a plurality of modes including a low-power mode and a full-power mode. The trusted execution environment maintains security of the sensor data across all operational modes (e.g., the RGB sensor described above is configurable to operate in ASC mode, spectral light mode, and spectral full mode; and the trusted zone maintains security of the image data across all operational modes).

In some embodiments, the sensor is configurable to operate in (i) an always-sensing camera mode utilizing a first image signal processor, (ii) a spectral light mode utilizing a second image signal processor, and (iii) a spectral full mode utilizing the second image signal processor.

In some embodiments, the always-sensing camera mode operates using a first sensor core and the first image signal processor. The spectral light mode and spectral full mode operate using a second sensor core and the second image signal processor. The trusted execution environment maintains secure data paths for each mode.

In some embodiments, the secure processing pathway includes a trusted resource manager, a last-level cache, a dynamic random-access memory, and/or a peripheral component interconnect express interface.

In some embodiments, the secure processing pathway supports concurrent execution of computer vision processing, media capture processing, and contextual artificial intelligence processing.

In some embodiments, the trusted execution environment implements different security policies for proactive artificial intelligence operations requiring secure processing, and reactive artificial intelligence operations allowing non-secure processing.

In some embodiments, the secure processing pathway includes a firmware executed (e.g., the firmware 132) in a sensor core. The non-secure processing pathway includes host operating system software (e.g., the OS 136) executed in an application processor.

In some embodiments, the SoC further includes a per-physical interface muting control (e.g. interfaces 608 and 610) configured to enable muting for non-secure operations while maintaining active operation for secure operations, examples of which are described above in reference to Figure 6).

In some embodiments, the secure processing pathway includes a hardware trusted execution environment. The hardware trusted execution environment is configured to process secure sensor data independently of the non-secure operating system. For example, the secure processing pathway includes an ASC sensor core executing a firmware, and the ASC sensor core is configured to process secure image data independently of the host operating system software.

In some embodiments, proactive artificial intelligence operations are executed through the secure processing pathway without activating the privacy indicator. Reactive artificial intelligence operations are executed through the non-secure processing pathway with the privacy indicator activated.

In some embodiments, the trusted execution environment implements access control policies that prevent the non-secure operating system from accessing secure sensor configuration registers, secure memory regions, and/or secure processing results. For example, the trusted zone implements security controls that: enable secure data paths through the ASC-ISP and trusted resource manager, control muting on a per-physical interface basis, and manage transitions between secure and non-secure domains.

In some embodiments, the image sensor is an RGB sensor that supports (i) computer vision processing in ASC mode, spectral light mode, and spectral full mode, (ii) media capture in spectral full mode only, and (iii) contextual AI processing in ASC mode for proactive operations and spectral full mode for both proactive and reactive operations.

The atomic nature of the mute operations prevents race conditions that could otherwise occur during privacy state transitions. By ensuring that mute state changes complete as indivisible operations, scenarios where sensors are partially muted or where intermediate states could be exploited by malicious software are avoided. In some embodiments, hardware-level enforcement provides protection when operating systems (e.g. OS 136), components, or software have been compromised.

The write-1-to-set register architecture described herein can prevent attempts to silently re-enable sensors when a mute operation has been initiated. The hardware reset requirement for clearing storage units (e.g. registers) that enforce mute states can ensure that only deliberate physical actions on a hardware component of a device can unmute or otherwise enable sensor functionality.

In some embodiments, the mute circuit includes dedicated signal routing that bypasses software-accessible buses. The trigger signal path from a physical switch (e.g. physical switch 212) may connect directly to the mute control circuit (e.g. mute control logic 330) through isolated traces that cannot be intercepted or modified by software operations. This physical isolation provides an additional layer of security against sophisticated attacks that attempt to manipulate signal paths.

In some embodiments, the mute circuit implements debouncing logic for physical trigger inputs to prevent mute state changes caused by electrical noise, mechanical switch bounces, or other unintended trigger inputs. The debouncing can be performed entirely in hardware using analog filtering circuits or digital counters that require a stable input signal for a predetermined duration before registering a state change.

In some embodiments, timer (e.g. timer 120) threshold values are configurable, e.g., during system initialization to accommodate different sensor types. For example, a camera sensor with complex image signal processing requirements may require a longer timeout period than a microphone sensor (e.g. a few seconds to a few microseconds). In some embodiments, the timer (e.g. timer 120) supports multiple thresholds corresponding to different sensor types.

In some embodiments, the pending bit (e.g. the mute pending register 310) prevents rapid toggling of the mute state. By requiring software acknowledgment before accepting new trigger events, the system can ensure expected processing of mute requests while maintaining hardware-level enforcement of the mute state. In some embodiments, the mute pending component (e.g. mute pending register 310) includes additional status bits indicating the direction of the pending mute state change (e.g. mute entry or mute exit) and the source of the trigger signal.

In some embodiments, the initialization sequence performed by a MCU (e.g. MCU 702) includes verification steps that confirm configuration before enabling mute enforcement. In some embodiments, the verification comprises matching register values to expected register values stored in secure memory (e.g. secure memory 432). In some embodiments, a failed verification triggers one of a boot failure or degraded operation mode, the degraded operation mode signaling a potential security issue.

In some embodiments, the mute mask register supports hierarchical sensor groupings, wherein setting a single bit in the mute mask register mutes an entire category of sensors (e.g. sensors 602 and 604). In some embodiments, the hierarchical sensor groupings are defined during initialization based on device configuration and/or privacy policies.

In some embodiments, the secure processing pathway implements memory encryption for sensor data stored in secure memory regions (e.g. secure memory 432). In some embodiments, the encryption comprises using hardware-accelerated cryptographic engines that secure encrypted data even if the contents of the secure memory regions are accessed by unauthorized components or software.

In some embodiments, the privacy indicator (e.g. privacy indicator 410) comprises multiple indication modes corresponding to different sensor operation states. For example, a solid illumination indicates active non-secure capture, a pulsing pattern indicates secure-only operation, and no illumination indicates fully muted sensors. In some embodiments, the indicator control logic is implemented in hardware to prevent software manipulation of the indicator modes.

In some embodiments, the privacy indicator includes tamper detection circuitry that monitors for attempts to physically disable or obscure the indicator. Detection of tampering can trigger automatic sensor muting and security event logging. In some embodiments, the tamper detection uses redundant sensing elements to distinguish between legitimate indicator failures and deliberate sensor interference.

In some embodiments, the mute circuit is integrated into a physical component of a head-wearable device (e.g. a temple arm of a pair of smart glasses, an outer surface of a VR headset, a display on an XR device, or any other suitable component of a head-wearable device) as either a physical slider, button, or other hardware component, the physical component providing tactile feedback to the user upon activation and deactivation of the mute state.

(A1) In one aspect, some embodiments include a system (e.g., an SoC, such as SoC 202) comprising a mute circuit (e.g., a hardware privacy mute circuit, such as privacy mute circuit 114) configured to: (a) store a mute state that is modifiable only through hardware operations; (b) receive a mute trigger signal from a hardware source; (c) in response to the mute trigger signal, atomically apply the enforced mute state to one or more sensors; and (d) in accordance with the mute trigger signal no longer being received, atomically clear the enforced mute state to enable the one or more sensors.

(A2) In some embodiments of A1, the system includes a timer configured to count upon initiation of and while a mute trigger signal is being received and generate a failure signal (e.g., a mute_dirty_done signal) if the mute state is not atomically applied to the one or more sensors within a predetermined time. The predetermined time may range from milliseconds to a few seconds depending on system requirements. In some embodiments, the timer is implemented as a watchdog timer (WDT) that coordinates with multiple microcontroller units to ensure synchronized mute state transitions across subsystems. The timer threshold values may be loaded from one-time programmable (OTP) memory during initialization, or alternatively, a safe default configuration may be hardcoded in ROM.

(A3) In some embodiments of A2, the mute circuit is further configured to atomically apply the mute state in response to either (i) a success signal (e.g., a mute_clean_done signal) indicating successful application of the mute state, or (ii) the failure signal from the timer. The success signal may be generated by a CMRT via an outgoing interrupt block after all subsystems have responded to inter-process communication (IPC) requests. In some embodiments, when the failure signal is generated, the system performs remediation operations, e.g., defined by software architecture specifications.

(A4) In some embodiments of any of A1-A3, the system includes a mute pending register configured to set a pending bit in response to receiving the mute trigger signal, maintain the pending bit, and in response to a software command, clear the pending bit. For example, the circuit is configured to ignore subsequent mute trigger signal changes while the pending bit is maintained. In some embodiments, the pending bit is set when the mute trigger input changes polarity, and a mute IRQ is generated to notify processing units of the state change. The pending bit may remain set until software explicitly clears it, forcing the sequence state back to waiting for the next mute input polarity change.

(A5) In some embodiments of any of A1-A4, the system further includes an initialization register configured to store unmasked states (e.g., raw state bits) of at least one of: a GPIO input (e.g., mute_n), a virtual wire input (e.g., mute_remote_n), and a hardware-generated request, (e.g., mute_cmrt_n). The initialization register may be configured to prevent further modifications until a hardware reset occurs, and activate mute enforcement based on the unmasked states. In some embodiments, the raw inputs are masked by enabling logic before contributing to a combined mute trigger value, allowing selective activation of specific input sources while ignoring others.

(A6) In some embodiments of any of A1-A5, the mute circuit is further configured to enter a mute state based on an initial state of enabled trigger inputs when an initialization done bit is set, without generating an interrupt. This silent entry into mute mode can allow the system to initialize into a muted state during boot without triggering interrupt handlers, e.g., enabling seamless privacy enforcement from system startup. In some embodiments, the mute mask is driven to the pre-configured value without generating an IRQ to any of a boot microcontroller unit, system management control unit, or CMRT.

(A7) In some embodiments of any of A1-A6, the mute state is retained through software reset operations. For example, the mute state is only cleared during hardware external reset events, ensuring that privacy enforcement persists even if the operating system or firmware is restarted. This provides protection against software-based attacks that attempt to clear privacy settings through system resets.

(A8) In some embodiments of any of A1-A7, the system further includes a plurality of processing units (e.g., MCUs, BMCUs, and SMCUs) configured to coordinate atomic mute operations across a plurality of subsystems based on predetermined mute sequences and enforce synchronized mute state transitions across the plurality of subsystems. The processing units may include a BMCU that clears and starts a mute watchdog timer, an SMCU that informs a high-level operating system (HLOS) about mute status changes, and/or a CMRT that initializes inter-process communication to other subsystems participating in the mute flow. In some embodiments, the BMCU pauses the watchdog timer and clears the pending bit after successful mute completion.

(A9) In some embodiments of any of A1-A8, the circuit is configured to accept only one active trigger input source at a time based on enable bits and mask all other trigger input sources until the next hardware reset. This single-source selection can prevent conflicting trigger signals and simplify the mute state machine. In some embodiments, the selection among the three input paths (GPIO, virtual wire, and hardware-generated request) is performed by the BMCU as a function of strap pins and OTP values during boot initialization.

(A10) In some embodiments of any of A1-A9, the system further includes an initialization register configured to load initial configuration values from OTP memory including trigger input source selection, initial mute state values, and timer threshold values. The loaded configuration cannot be modified after an enable lock bit is set. In some embodiments, the enable lock bit has write-1-to-set access, and once set, hardware suppresses any further writes to the initialization register until the next hardware reset. The OTP addresses for these configuration values may be defined in a boot ROM specification.

(A11) In some embodiments of any of A1-A10, the enforced mute state includes a plurality of bits, each bit configured to control muting of a specific sensor type in accordance with initialization register settings. Sensor types may include cameras, microphones, inertial measurement units, time-of-flight sensors, thermal cameras, and environmental sensors. In some embodiments, the mute circuit is configured to require an atomic unmute operation that simultaneously clears all active enforced mute state bits, preventing partial unmuting of individual sensors.

(A12) In some embodiments of any of A1-A11, applying the mute state comprises using a mute mask register configured to store a mute enforcement mask that can only be modified through write-1-to-set operations.

(A13) In some embodiments of any of A1-A12, the system further includes a mute enforcement status register configured to store a current mute enforcement status.

(A14) In some embodiments of any of A1-A13, the system further includes a mute initialization register including a plurality of enable bits corresponding to different mute trigger input sources, an enable lock bit configured to prevent further modifications to the enable bits until a hardware reset occurs when set, and an initialization done bit configured to activate mute enforcement based on enabled trigger inputs when set.

(A15) In some embodiments of any of A1-A14, the hardware source includes at least one of: a GPIO input, a virtual wire input, or a hardware-generated request. In some embodiments, the GPIO input is electrically isolated from software interfaces to prevent programmatic tampering with privacy controls. The trigger signals may be active-low, where a transition from logic high to logic low indicates mute entry and a transition from logic low to logic high indicates mute exit.

Figure 8 illustrates a flow diagram of a method of a mute circuit storing a mute state, in accordance with some embodiments. Operations (e.g., steps) of the method 800 can be performed by one or more processors (e.g., central processing unit and/or MCU) of a system (e.g., an AR headset or smart watch). At least some of the operations shown in Figure 8 correspond to instructions stored in a computer memory or computer-readable storage medium (e.g., storage, RAM, and/or memory, such as memory of a device; Figure 10A). Operations of the method 800 can be performed by a single device alone or in conjunction with one or more processors and/or hardware components of another communicatively coupled device (e.g., a handheld intermediary processing device 1042, head-wearable device 1028, and/or other devices described below in reference to Figures 10A-10C) and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device, but should not be construed as limiting the performance of the operation to the particular device in all embodiments.

(B1) Figure 8 shows a flow chart of a method 800 of a mute circuit storing a mute state, in accordance with some embodiments. The method 800 includes storing (810), by a mute circuit of a system, a mute state, the mute state modifiable only through hardware operations; receiving (820), by the mute circuit, a mute trigger signal from a hardware source; in response to the mute trigger signal, atomically applying (830), by the mute circuit, the mute state to one or more sensors; and in accordance with the mute trigger signal no longer being received, atomically clearing (840), by the mute circuit, the mute state from the one or more sensors.

(B2) In some embodiments of B1, the method further includes counting, by a timer of the system, upon initiation of and while a mute trigger signal is being received, generating, by the timer, a failure signal if the mute state is not atomically applied by the mute circuit to the one or more sensors with a predetermined time, and atomically applying, by the mute circuit, the mute state in response to either (i) a success signal indicating successful application of the mute state, or (ii) the failure signal from the timer.

(B3) In some embodiments of B1-B2, the method further includes, in response to receiving the mute trigger signal, setting, by a mute pending register of the system, a pending bit, maintaining, by the mute pending register, the pending bit, wherein the mute circuit is further configured to ignore subsequent mute trigger signal changes while the pending bit is maintained, and in response to a software command, clearing, by the mute pending register, the pending bit.

(B4) In some embodiments of B1-B3, the method further includes, storing, in an initialization register of the system, unmasked states of at least one of: a GPIO input, a virtual wire input, and a hardware-generated request, preventing, in the initialization register, further modifications to the unmasked states until a hardware reset occurs, and activating, in the initialization register, mute enforcement based on the unmasked states.

(B5) In some embodiments of B1-B4, the mute circuit is further configured to enter a mute state based on an initial state of enabled trigger inputs when an initialization done bit is set, without generating an interrupt.

(B6) In some embodiments of B1-B5, the mute state is retained through a software reset operation.

(B7) In some embodiments of B1-B6, the method further includes coordinating, by a plurality of microcontroller units, atomic mute operations across a plurality of subsystems based on predetermined mute sequences, and enforcing, by the plurality of microcontroller units, synchronized mute state transitions across the plurality of subsystems.

(B8) In some embodiments of B1-B7, applying the mute state comprises using a mute mask register configured to store a mute enforcement masks that can only be modified through write-1-to-set operations.

(B9) In some embodiments, the method further includes any of the features described above with respect to A1-A15.

In another aspect, some embodiments include a system (e.g., an SOC) comprising: (i) a hardware-enforced privacy mute circuit comprising: (ii) a mute mask register configured to store a mute enforcement mask that can only be modified through write-1-to-set operations; (iii) a mute enforcement status register configured to store a current mute enforcement status; (iv) a mute initialization register comprising: (a) a plurality of enable bits corresponding to different mute trigger input sources, (b) an enable lock bit configured to, when set, prevent further modifications to the enable bits until a hardware reset occurs, and (c) an initialization done bit configured to activate mute enforcement based on enabled trigger inputs when set; and (v) mute control logic configured to: (I) receive a mute trigger signal from at least one of: a GPIO input, a virtual wire input, or a hardware-generated request, (II) in response to a transition of the mute trigger signal from an inactive state to an active state: (1) atomically apply the mute enforcement mask stored in the mute mask register to disable one or more sensors, and (2) signal the mute state change, and (3) in response to a transition of the mute trigger signal from the active state to the inactive state: (A) atomically clear the mute enforcement mask to enable the one or more sensors, and (B) signal the mute state change, where the mute enforcement mask cannot be modified through software operations once set except through a hardware reset of the SoC. In some embodiments, the system includes any of the features of A2-A15.

(D1) In another aspect, some embodiments include a system (e.g. a secure sensor system, such as secure sensor system 400) that comprises: (i) a sensor configured to capture data; (ii) a secure processing pathway coupled to the sensor; (iii) a non-secure processing pathway coupled to the sensor; and (iv) a trusted execution environment configured to: (a) control routing of sensor data between the secure and non-secure processing pathways, (b) selectively enable muting of the sensor, and (c) manage privacy indicators associated with operation of the sensor, where the secure processing pathway processes sensor data without exposure of the sensor data to a non-secure operating system.

(D2) In some embodiments of D1: (i) the sensor comprises an image sensor; (ii) the secure processing pathway comprises a secure image signal processor; and (iii) the non-secure processing pathway comprises a non-secure image signal processor.

(D3) In some embodiments of D1 or D2, the trusted execution environment is configured to enable concurrent operation of secure and non-secure processing of sensor data from the sensor.

(D4) In some embodiments of any of D1-D3, the trusted execution environment is configured to selectively mute the sensor for the non-secure processing pathway while maintaining sensor operation for the secure processing pathway.

(D5) In some embodiments of any of D1-D4, the system further comprises a privacy indicator controlled by the trusted execution environment, where the privacy indicator is activated when the sensor is capturing data for non-secure operations and deactivated when the sensor is capturing data only for secure operations.

(D6) In some embodiments of any of D1-D5, the secure processing pathway includes a neural processing unit configured to process the sensor data within a secure domain (e.g., an embedded neural processing unit configured to process image data within the ASC sensor core).

(D7) In some embodiments of any of D1-D6, the trusted execution environment is configured to: (i) route sensor data through the secure processing pathway for computer vision operations; (ii) route sensor data through the non-secure processing pathway for user-initiated media capture operations; and (iii) selectively route sensor data through either pathway for artificial intelligence operations based on whether the operations are proactive or reactive.

(D8) In some embodiments of any of D1-D7, the secure processing pathway comprises a secure memory region, and wherein the non-secure processing pathway comprises a non-secure memory region isolated from the secure memory region.

(D9) In some embodiments of any of D1-D8, the trusted execution environment is configured to provide notification of data transitions between secure and non-secure domains on a per-port basis.

(D10) In some embodiments of any of D1-D9, the sensor is configurable to operate in a plurality of modes including a low-power mode and a full-power mode, where the trusted execution environment maintains security of the sensor data across all operational modes.

(D11) In some embodiments of any of D1-D10, the sensor is configurable to operate in (i) an always-sensing camera mode utilizing a first image signal processor, (ii) a spectral light mode utilizing a second image signal processor, and (iii) a spectral full mode utilizing the second image signal processor.

(D12) In some embodiments of D11, the always-sensing camera mode operates using a first sensor core and the first image signal processor, the spectral light mode and spectral full mode operate using a second sensor core and the second image signal processor, and the trusted execution environment maintains secure data paths for each mode.

(D13) In some embodiments of any of D1-D12, the secure processing pathway comprises a trusted resource manager, a last-level cache, a dynamic random-access memory, and a peripheral component interconnect express interface.

(D14) In some embodiments of any of D1-D13, the secure processing pathway supports concurrent execution of computer vision processing, media capture processing, and contextual artificial intelligence processing.

(D15) In some embodiments of any of D1-D14, the trusted execution environment implements different security policies for proactive artificial intelligence operations requiring secure processing, and reactive artificial intelligence operations allowing non-secure processing.

(D16) In some embodiments of any of D1-D15, the secure processing pathway comprises a firmware executed in a sensor core, and the non-secure processing pathway comprises host operating system software executed in an application processor.

(D17) In some embodiments of any of D1-D16, the system further comprises a per-physical interface muting control configured to enable muting for non-secure operations while maintaining active operation for secure operations.

(D18) In some embodiments of any of D1-D17, the secure processing pathway includes a hardware trusted execution environment, and the hardware trusted execution environment is configured to process secure sensor data independently of the non-secure operating system.

(D19) In some embodiments of any of D1-D18, proactive artificial intelligence operations are executed through the secure processing pathway without activating the privacy indicator, and reactive artificial intelligence operations are executed through the non-secure processing pathway with the privacy indicator activated.

(D20) In some embodiments of any of D1-D19, the trusted execution environment implements access control policies that prevent the non-secure operating system from accessing: secure sensor configuration registers, secure memory regions, and secure processing results.

(D21) In some embodiments of any of D1-D20, the sensor is an RGB sensor that supports (i) computer vision processing in ASC mode, spectral light mode, and spectral full mode, (ii) media capture in spectral full mode only, and (iii) contextual AI processing in ASC mode for proactive operations and spectral full mode for both proactive and reactive operations.

(D22) In some embodiments of any of D1-D21, the system further includes any of the features of A1-A15.

Figure 9 illustrates a flow diagram of a method for secure sensor operation, in accordance with some embodiments. Operations (e.g., steps) of the method 900 can be performed by one or more processors (e.g., central processing unit and/or MCU) of a system (e.g., an AR headset or smart watch). At least some of the operations shown in Figure 9 correspond to instructions stored in a computer memory or computer-readable storage medium (e.g., storage, RAM, and/or memory, such as memory of a device; Figure 10A). Operations of the method 900 can be performed by a single device alone or in conjunction with one or more processors and/or hardware components of another communicatively coupled device (e.g., a handheld intermediary processing device 1042, head-wearable device 1028, and/or other devices described below in reference to Figures 10A-10C) and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device, but should not be construed as limiting the performance of the operation to the particular device in all embodiments.

(E1) Figure 9 shows a flow chart of a method 800 for secure sensor operation, in accordance with some embodiments. The method 900 includes capturing (910) data using a sensor, routing (920) sensor data between secure and non-secure pathways, selectively enabling (930) muting of the sensor, and managing (940) privacy indicators associated with operation of the sensor, wherein processing sensor data in the secure processing pathway occurs without exposure to a non-secure operating system.

(E2) In some embodiments of E1: (i) the sensor comprises an image sensor; (ii) the secure processing pathway comprises a secure image signal processor; and (iii) the non-secure processing pathway comprises a non-secure image signal processor.

(E3) In some embodiments of E1 or E2, the method includes a trusted execution environment is configured to enable concurrent operation of secure and non-secure processing of sensor data from the sensor.

(E4) In some embodiments of any of E1-E3, the trusted execution environment is configured to selectively mute the sensor for the non-secure processing pathway while maintaining sensor operation for the secure processing pathway.

(E5) In some embodiments of any of E1-E4, the method includes a privacy indicator controlled by the trusted execution environment, where the privacy indicator is activated when the sensor is capturing data for non-secure operations and deactivated when the sensor is capturing data only for secure operations.

(E6) In some embodiments of any of E1-E5, the secure processing pathway includes a neural processing unit configured to process the sensor data within a secure domain (e.g., an embedded neural processing unit configured to process image data within the ASC sensor core).

(E7) In some embodiments of any of E1-E6, the trusted execution environment is configured to: (i) route sensor data through the secure processing pathway for computer vision operations; (ii) route sensor data through the non-secure processing pathway for user-initiated media capture operations; and (iii) selectively route sensor data through either pathway for artificial intelligence operations based on whether the operations are proactive or reactive.

(E8) In some embodiments of any of E1-E7, the secure processing pathway comprises a secure memory region, and wherein the non-secure processing pathway comprises a non-secure memory region isolated from the secure memory region.

(E9) In some embodiments of any of E1-E8, the trusted execution environment is configured to provide notification of data transitions between secure and non-secure domains on a per-port basis.

(E10) In some embodiments of any of E1-E9, the sensor is configurable to operate in a plurality of modes including a low-power mode and a full-power mode, where the trusted execution environment maintains security of the sensor data across all operational modes.

(E11) In some embodiments of any of E1-E10, the sensor is configurable to operate in (i) an always-sensing camera mode utilizing a first image signal processor, (ii) a spectral light mode utilizing a second image signal processor, and (iii) a spectral full mode utilizing the second image signal processor.

(E12) In some embodiments of E11, the always-sensing camera mode operates using a first sensor core and the first image signal processor, the spectral light mode and spectral full mode operate using a second sensor core and the second image signal processor, and the trusted execution environment maintains secure data paths for each mode.

(E13) In some embodiments of any of E1-E12, the secure processing pathway comprises a trusted resource manager, a last-level cache, a dynamic random-access memory, and a peripheral component interconnect express interface.

(E14) In some embodiments of any of E1-E13, the secure processing pathway supports concurrent execution of computer vision processing, media capture processing, and contextual artificial intelligence processing.

(E15) In some embodiments of any of E1-E14, the trusted execution environment implements different security policies for proactive artificial intelligence operations requiring secure processing, and reactive artificial intelligence operations allowing non-secure processing.

(E16) In some embodiments of any of E1-E15, the secure processing pathway comprises a firmware executed in a sensor core, and the non-secure processing pathway comprises host operating system software executed in an application processor.

(E17) In some embodiments of any of E1-E16, the method includes a per-physical interface muting control configured to enable muting for non-secure operations while maintaining active operation for secure operations.

(E18) In some embodiments of any of E1-E17, the secure processing pathway includes a hardware trusted execution environment, and the hardware trusted execution environment is configured to process secure sensor data independently of the non-secure operating system.

(E19) In some embodiments of any of E1-E18, proactive artificial intelligence operations are executed through the secure processing pathway without activating the privacy indicator, and reactive artificial intelligence operations are executed through the non-secure processing pathway with the privacy indicator activated.

(E20) In some embodiments of any of E1-E19, the trusted execution environment implements access control policies that prevent the non-secure operating system from accessing: secure sensor configuration registers, secure memory regions, and secure processing results.

(E21) In some embodiments of any of E1-E20, the sensor is an RGB sensor that supports (i) computer vision processing in ASC mode, spectral light mode, and spectral full mode, (ii) media capture in spectral full mode only, and (iii) contextual AI processing in ASC mode for proactive operations and spectral full mode for both proactive and reactive operations.

(E22) In some embodiments of any of E1-E21, the method includes any of the features of A1-A15.

The methods described in the present disclosure (e.g., B1-B16 and E1-E22) may be performed by a system or device, such as the XR devices described herein (e.g., AR glasses, MR headsets, wrist-wearable devices, intermediary processing devices), and may correspond to instructions stored on a non-transitory computer-readable storage medium that, when executed by one or more processors of such devices, cause the devices to perform the disclosed operations.

The devices described above are further detailed below, including wrist-wearable devices, headset devices, systems, and haptic feedback devices. Specific operations described above may occur as a result of specific hardware, such hardware is described in further detail below. The devices described below are not limiting and features on these devices can be removed or additional features can be added to these devices.

### Example Extended-Reality Systems

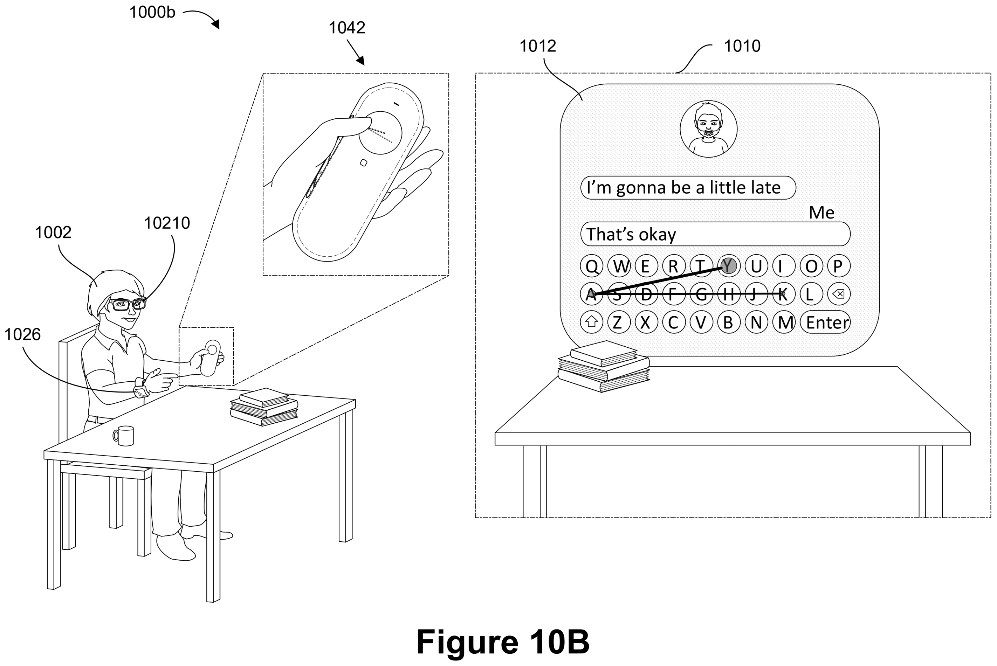

Figures 10A 10B, 10C-1, and 10C-2, illustrate example XR systems that include AR and MR systems, in accordance with some embodiments. Figure 10A shows a first XR system 1000a and first example user interactions using a wrist-wearable device 1026, a head-wearable device (e.g., AR device 10210), and/or a HIPD 1042. Figure 10B shows a second XR system 1000b and second example user interactions using a wrist-wearable device 1026, AR device 10210, and/or an HIPD 1042. Figures 10C-1, and 10C-2 show a third MR system 1000c and third example user interactions using a wrist-wearable device 1026, a head-wearable device (e.g., an MR device such as a VR device), and/or an HIPD 1042. As the skilled artisan will appreciate upon reading the descriptions provided herein, the above-example AR and MR systems (described in detail below) can perform various functions and/or operations.

The wrist-wearable device 1026, the head-wearable devices, and/or the HIPD 1042 can communicatively couple via a network 1025 (e.g., cellular, near field, Wi-Fi, personal area network, wireless LAN). Additionally, the wrist-wearable device 1026, the head-wearable device, and/or the HIPD 1042 can also communicatively couple with one or more servers 1030, computers 1040 (e.g., laptops, computers), mobile devices 1050 (e.g., smartphones, tablets), and/or other electronic devices via the network 1025 (e.g., cellular, near field, Wi-Fi, personal area network, wireless LAN). Similarly, a smart textile-based garment, when used, can also communicatively couple with the wrist-wearable device 1026, the head-wearable device(s), the HIPD 1042, the one or more servers 1030, the computers 1040, the mobile devices 1050, and/or other electronic devices via the network 1025 to provide inputs.

Turning to Figure 10A, a user 1002 is shown wearing the wrist-wearable device 1026 and the AR device 10210 and having the HIPD 1042 on their desk. The wrist-wearable device 1026, the AR device 10210, and the HIPD 1042 facilitate user interaction with an AR environment. In particular, as shown by the first AR system 1000a, the wrist-wearable device 1026, the AR device 10210, and/or the HIPD 1042 cause presentation of one or more avatars 1004, digital representations of contacts 1006, and virtual objects 10010. As discussed below, the user 1002 can interact with the one or more avatars 1004, digital representations of the contacts 1006, and virtual objects 10010 via the wrist-wearable device 1026, the AR device 10210, and/or the HIPD 1042. In addition, the user 1002 is also able to directly view physical objects in the environment, such as a physical table 1029, through transparent lens(es) and waveguide(s) of the AR device 10210. Alternatively, an MR device could be used in place of the AR device 10210 and a similar user experience can take place, but the user would not be directly viewing physical objects in the environment, such as table 1029, and would instead be presented with a virtual reconstruction of the table 1029 produced from one or more sensors of the MR device (e.g., an outward facing camera capable of recording the surrounding environment).

The user 1002 can use any of the wrist-wearable device 1026, the AR device 10210 (e.g., through physical inputs at the AR device and/or built-in motion tracking of a user's extremities), a smart-textile garment, externally mounted extremity tracking device, the HIPD 1042 to provide user inputs, etc. For example, the user 1002 can perform one or more hand gestures that are detected by the wrist-wearable device 1026 (e.g., using one or more EMG sensors and/or IMUs built into the wrist-wearable device) and/or AR device 10210 (e.g., using one or more image sensors or cameras) to provide a user input. Alternatively, or additionally, the user 1002 can provide a user input via one or more touch surfaces of the wrist-wearable device 1026, the AR device 10210, and/or the HIPD 1042, and/or voice commands captured by a microphone of the wrist-wearable device 1026, the AR device 10210, and/or the HIPD 1042. The wrist-wearable device 1026, the AR device 10210, and/or the HIPD 1042 include an artificially intelligent digital assistant to help the user in providing a user input (e.g., completing a sequence of operations, suggesting different operations or commands, providing reminders, confirming a command). For example, the digital assistant can be invoked through an input occurring at the AR device 10210 (e.g., via an input at a temple arm of the AR device 10210). In some embodiments, the user 1002 can provide a user input via one or more facial gestures and/or facial expressions. For example, cameras of the wrist-wearable device 1026, the AR device 10210, and/or the HIPD 1042 can track the user 1002's eyes for navigating a user interface.

The wrist-wearable device 1026, the AR device 10210, and/or the HIPD 1042 can operate alone or in conjunction to allow the user 1002 to interact with the AR environment. In some embodiments, the HIPD 1042 is configured to operate as a central hub or control center for the wrist-wearable device 1026, the AR device 10210, and/or another communicatively coupled device. For example, the user 1002 can provide an input to interact with the AR environment at any of the wrist-wearable device 1026, the AR device 10210, and/or the HIPD 1042, and the HIPD 1042 can identify one or more back-end and front-end tasks to cause the performance of the requested interaction and distribute instructions to cause the performance of the one or more back-end and front-end tasks at the wrist-wearable device 1026, the AR device 10210, and/or the HIPD 1042. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 1042 can perform the back-end tasks and provide the wrist-wearable device 1026 and/or the AR device 10210 operational data corresponding to the performed back-end tasks such that the wrist-wearable device 1026 and/or the AR device 10210 can perform the front-end tasks. In this way, the HIPD 1042, which has more computational resources and greater thermal headroom than the wrist-wearable device 1026 and/or the AR device 10210, performs computationally intensive tasks and reduces the computer resource utilization and/or power usage of the wrist-wearable device 1026 and/or the AR device 10210.

In the example shown by the first AR system 1000a, the HIPD 1042 identifies one or more back-end tasks and front-end tasks associated with a user request to initiate an AR video call with one or more other users (represented by the avatar 1004 and the digital representation of the contact 1006) and distributes instructions to cause the performance of the one or more back-end tasks and front-end tasks. In particular, the HIPD 1042 performs back-end tasks for processing and/or rendering image data (and other data) associated with the AR video call and provides operational data associated with the performed back-end tasks to the AR device 10210 such that the AR device 10210 performs front-end tasks for presenting the AR video call (e.g., presenting the avatar 1004 and the digital representation of the contact 1006).

In some embodiments, the HIPD 1042 can operate as a focal or anchor point for causing the presentation of information. This allows the user 1002 to be generally aware of where information is presented. For example, as shown in the first AR system 1000a, the avatar 1004 and the digital representation of the contact 1006 are presented above the HIPD 1042. In particular, the HIPD 1042 and the AR device 10210 operate in conjunction to determine a location for presenting the avatar 1004 and the digital representation of the contact 1006. In some embodiments, information can be presented within a predetermined distance from the HIPD 1042 (e.g., within five meters). For example, as shown in the first AR system 1000a, virtual object 10010 is presented on the desk some distance from the HIPD 1042. Similar to the above example, the HIPD 1042 and the AR device 10210 can operate in conjunction to determine a location for presenting the virtual object 10010. Alternatively, in some embodiments, presentation of information is not bound by the HIPD 1042. More specifically, the avatar 1004, the digital representation of the contact 1006, and the virtual object 10010 do not have to be presented within a predetermined distance of the HIPD 1042. While an AR device 10210 is described working with an HIPD, an MR headset can be interacted with in the same way as the AR device 10210.

User inputs provided at the wrist-wearable device 1026, the AR device 10210, and/or the HIPD 1042 are coordinated such that the user can use any device to initiate, continue, and/or complete an operation. For example, the user 1002 can provide a user input to the AR device 10210 to cause the AR device 10210 to present the virtual object 10010 and, while the virtual object 10010 is presented by the AR device 10210, the user 1002 can provide one or more hand gestures via the wrist-wearable device 1026 to interact and/or manipulate the virtual object 10010. While an AR device 10210 is described working with a wrist-wearable device 1026, an MR headset can be interacted with in the same way as the AR device 10210.

### Integration of Artificial Intelligence with XR Systems

Figure 10A illustrates an interaction in which an artificially intelligent virtual assistant can assist in requests made by a user 1002. The Al virtual assistant can be used to complete open-ended requests made through natural language inputs by a user 1002. For example, in Figure 10A the user 1002 makes an audible request 1044 to summarize the conversation and then share the summarized conversation with others in the meeting. In addition, the Al virtual assistant is configured to use sensors of the XR system (e.g., cameras of an XR headset, microphones, and various other sensors of any of the devices in the system) to provide contextual prompts to the user for initiating tasks.

Figure 10A also illustrates an example neural network 1052 used in Artificial Intelligence applications. Uses of Artificial Intelligence (AI) are varied and encompass many different aspects of the devices and systems described herein. AI capabilities cover a diverse range of applications and deepen interactions between the user 1002 and user devices (e.g., the AR device 10210, an MR device 1032, the HIPD 1042, the wrist-wearable device 1026). The Al discussed herein can be derived using many different training techniques. While the primary Al model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The Al models can be implemented at one or more of the user devices, and/or any other devices described herein. For devices and systems herein that employ multiple Al models, different models can be used depending on the task. For example, for a natural-language artificially intelligent virtual assistant, an LLM can be used and for the object detection of a physical environment, a DNN can be used instead.

In another example, an Al virtual assistant can include many different Al models and based on the user's request, multiple Al models may be employed (concurrently, sequentially or a combination thereof). For example, an LLM-based Al model can provide instructions for helping a user follow a recipe and the instructions can be based in part on another Al model that is derived from an ANN, a DNN, an RNN, etc. that is capable of discerning what part of the recipe the user is on (e.g., object and scene detection).

As Al training models evolve, the operations and experiences described herein could potentially be performed with different models other than those listed above, and a person skilled in the art would understand that the list above is non-limiting.

A user 1002 can interact with an Al model through natural language inputs captured by a voice sensor, text inputs, or any other input modality that accepts natural language and/or a corresponding voice sensor module. In another instance, input is provided by tracking the eye gaze of a user 1002 via a gaze tracker module. Additionally, the AI model can also receive inputs beyond those supplied by a user 1002. For example, the Al can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 10210) or from multiple devices that are in communication with each other (e.g., a system that includes at least two of an AR device 10210, an MR device 1032, the HIPD 1042, the wrist-wearable device 1026, etc.). The Al model can also access additional information (e.g., one or more servers 1030, the computers 1040, the mobile devices 1050, and/or other electronic devices) via a network 1025.

A non-limiting list of Al-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, Al-enhanced functions are fully or partially executed on cloud-computing platforms communicatively coupled to the user devices (e.g., the AR device 10210, an MR device 1032, the HIPD 1042, the wrist-wearable device 1026) via the one or more networks. The cloud-computing platforms provide scalable computing resources, distributed computing, managed Al services, interference acceleration, pre-trained models, APIs and/or other resources to support comprehensive computations required by the Al-enhanced function.

Example outputs stemming from the use of an Al model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 10210, an MR device 1032, the HIPD 1042, the wrist-wearable device 1026), storage options of the external devices (servers, computers, mobile devices, etc.), and/or storage options of the cloud-computing platforms.

The Al-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 1042), haptic feedback can provide information to the user 1002. An Al model can also use the inputs described above to determine the appropriate modality and device(s) to present content to the user (e.g., a user walking on a busy road can be presented with an audio output instead of a visual output to avoid distracting the user 1002).

### Example Augmented Reality Interaction

Figure 10B shows the user 1002 wearing the wrist-wearable device 1026 and the AR device 10210 and holding the HIPD 1042. In the second AR system 1000b, the wrist-wearable device 1026, the AR device 10210, and/or the HIPD 1042 are used to receive and/or provide one or more messages to a contact of the user 1002. In particular, the wrist-wearable device 1026, the AR device 10210, and/or the HIPD 1042 detect and coordinate one or more user inputs to initiate a messaging application and prepare a response to a received message via the messaging application.

In some embodiments, the user 1002 initiates, via a user input, an application on the wrist-wearable device 1026, the AR device 10210, and/or the HIPD 1042 that causes the application to initiate on at least one device. For example, in the second AR system 1000b the user 1002 performs a hand gesture associated with a command for initiating a messaging application (represented by messaging user interface 1012); the wrist-wearable device 1026 detects the hand gesture; and, based on a determination that the user 1002 is wearing the AR device 10210, causes the AR device 10210 to present a messaging user interface 1012 of the messaging application. The AR device 10210 can present the messaging user interface 1012 to the user 1002 via its display (e.g., as shown by user 1002's field of view 1010). In some embodiments, the application is initiated and can be run on the device (e.g., the wrist-wearable device 1026, the AR device 10210, and/or the HIPD 1042) that detects the user input to initiate the application, and the device provides another device operational data to cause the presentation of the messaging application. For example, the wrist-wearable device 1026 can detect the user input to initiate a messaging application, initiate and run the messaging application, and provide operational data to the AR device 10210 and/or the HIPD 1042 to cause presentation of the messaging application. Alternatively, the application can be initiated and run at a device other than the device that detected the user input. For example, the wrist-wearable device 1026 can detect the hand gesture associated with initiating the messaging application and cause the HIPD 1042 to run the messaging application and coordinate the presentation of the messaging application.

Further, the user 1002 can provide a user input provided at the wrist-wearable device 1026, the AR device 10210, and/or the HIPD 1042 to continue and/or complete an operation initiated at another device. For example, after initiating the messaging application via the wrist-wearable device 1026 and while the AR device 10210 presents the messaging user interface 1012, the user 1002 can provide an input at the HIPD 1042 to prepare a response (e.g., shown by the swipe gesture performed on the HIPD 1042). The user 1002's gestures performed on the HIPD 1042 can be provided and/or displayed on another device. For example, the user 1002's swipe gestures performed on the HIPD 1042 are displayed on a virtual keyboard of the messaging user interface 1012 displayed by the AR device 10210.

In some embodiments, the wrist-wearable device 1026, the AR device 10210, the HIPD 1042, and/or other communicatively coupled devices can present one or more notifications to the user 1002. The notification can be an indication of a new message, an incoming call, an application update, a status update, etc. The user 1002 can select the notification via the wrist-wearable device 1026, the AR device 10210, or the HIPD 1042 and cause presentation of an application or operation associated with the notification on at least one device. For example, the user 1002 can receive a notification that a message was received at the wrist-wearable device 1026, the AR device 10210, the HIPD 1042, and/or other communicatively coupled device and provide a user input at the wrist-wearable device 1026, the AR device 10210, and/or the HIPD 1042 to review the notification, and the device detecting the user input can cause an application associated with the notification to be initiated and/or presented at the wrist-wearable device 1026, the AR device 10210, and/or the HIPD 1042.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 10210 can present to the user 1002 game application data and the HIPD 1042 can use a controller to provide inputs to the game. Similarly, the user 1002 can use the wrist-wearable device 1026 to initiate a camera of the AR device 10210, and the user can use the wrist-wearable device 1026, the AR device 10210, and/or the HIPD 1042 to manipulate the image capture (e.g., zoom in or out, apply filters) and capture image data.

While an AR device 10210 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances, an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 10C-1, and 10C-2, the user 1002 is shown wearing the wrist-wearable device 1026 and an MR device 1032 (e.g., a device capable of providing either an entirely VR experience or an MR experience that displays object(s) from a physical environment at a display of the device) and holding the HIPD 1042. In the third AR system 1000c, the wrist-wearable device 1026, the MR device 1032, and/or the HIPD 1042 are used to interact within an MR environment, such as a VR game or other MR/VR application. While the MR device 1032 presents a representation of a VR game (e.g., first MR game environment 1020) to the user 1002, the wrist-wearable device 1026, the MR device 1032, and/or the HIPD 1042 detect and coordinate one or more user inputs to allow the user 1002 to interact with the VR game.

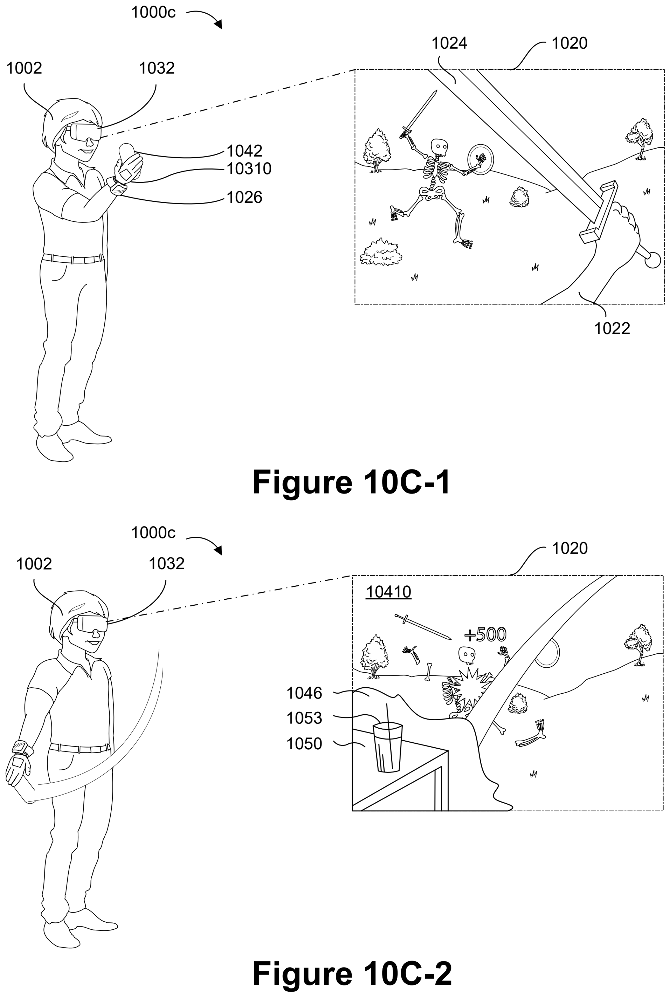

In some embodiments, the user 1002 can provide a user input via the wrist-wearable device 1026, the MR device 1032, and/or the HIPD 1042 that causes an action in a corresponding MR environment. For example, the user 1002 in the third MR system 1000c (shown in Figure 10C-1) raises the HIPD 1042 to prepare for a swing in the first MR game environment 1020. The MR device 1032, responsive to the user 1002 raising the HIPD 1042, causes the MR representation of the user 1022 to perform a similar action (e.g., raise a virtual object, such as a virtual sword 1024). In some embodiments, each device uses respective sensor data and/or image data to detect the user input and provide an accurate representation of the user 1002's motion. For example, image sensors (e.g., SLAM cameras or other cameras) of the HIPD 1042 can be used to detect a position of the HIPD 1042 relative to the user 1002's body such that the virtual object can be positioned appropriately within the first MR game environment 1020; sensor data from the wrist-wearable device 1026 can be used to detect a velocity at which the user 1002 raises the HIPD 1042 such that the MR representation of the user 1022 and the virtual sword 1024 are synchronized with the user 1002's movements; and image sensors of the MR device 1032 can be used to represent the user 1002's body, boundary conditions, or real-world objects within the first MR game environment 1020.

In Figure 10C-2, the user 1002 performs a downward swing while holding the HIPD 1042. The user 1002's downward swing is detected by the wrist-wearable device 1026, the MR device 1032, and/or the HIPD 1042 and a corresponding action is performed in the first MR game environment 1020. In some embodiments, the data captured by each device is used to improve the user's experience within the MR environment. For example, sensor data of the wrist-wearable device 1026 can be used to determine a speed and/or force at which the downward swing is performed and image sensors of the HIPD 1042 and/or the MR device 1032 can be used to determine a location of the swing and how it should be represented in the first MR game environment 1020, which, in turn, can be used as inputs for the MR environment (e.g., game mechanics, which can use detected speed, force, locations, and/or aspects of the user 1002's actions to classify a user's inputs (e.g., user performs a light strike, hard strike, critical strike, glancing strike, miss) or calculate an output (e.g., amount of damage)).

Figure 10C-2 further illustrates that a portion of the physical environment is reconstructed and displayed at a display of the MR device 1032 while the MR game environment 1020 is being displayed. In this instance, a reconstruction of the physical environment 1046 is displayed in place of a portion of the MR game environment 1020 when object(s) in the physical environment are potentially in the path of the user (e.g., a collision with the user and an object in the physical environment are likely). Thus, this example MR game environment 1020 includes (i) an immersive VR portion 10410 (e.g., an environment that does not have a corollary counterpart in a nearby physical environment) and (ii) a reconstruction of the physical environment 1046 (e.g., table 1050 and cup 1053). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 1026, the MR device 1032, and/or the HIPD 1042 are described as detecting user inputs, in some embodiments, user inputs are detected at a single device (with the single device being responsible for distributing signals to the other devices for performing the user input). For example, the HIPD 1042 can operate an application for generating the first MR game environment 1020 and provide the MR device 1032 with corresponding data for causing the presentation of the first MR game environment 1020, as well as detect the user 1002's movements (while holding the HIPD 1042) to cause the performance of corresponding actions within the first MR game environment 1020. Additionally or alternatively, in some embodiments, operational data (e.g., sensor data, image data, application data, device data, and/or other data) of one or more devices is provided to a single device (e.g., the HIPD 1042) to process the operational data and cause respective devices to perform an action associated with processed operational data.

In some embodiments, the user 1002 can wear a wrist-wearable device 1026, wear an MR device 1032, wear smart textile-based garments 10310 (e.g., wearable haptic gloves), and/or hold an HIPD 1042 device. In this embodiment, the wrist-wearable device 1026, the MR device 1032, and/or the smart textile-based garments 10310 are used to interact within an MR environment (e.g., any AR or MR system described above in reference to Figures 10A-10B). While the MR device 1032 presents a representation of an MR game (e.g., second MR game environment 1020) to the user 1002, the wrist-wearable device 1026, the MR device 1032, and/or the smart textile-based garments 10310 detect and coordinate one or more user inputs to allow the user 1002 to interact with the MR environment.

In some embodiments, the user 1002 can provide a user input via the wrist-wearable device 1026, an HIPD 1042, the MR device 1032, and/or the smart textile-based garments 10310 that causes an action in a corresponding MR environment. In some embodiments, each device uses respective sensor data and/or image data to detect the user input and provide an accurate representation of the user 1002's motion. While four different input devices are shown (e.g., a wrist-wearable device 1026, an MR device 1032, an HIPD 1042, and a smart textile-based garment 10310) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 10310) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 10310 can be used in conjunction with an MR device and/or an HIPD 1042.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 10A-10C-2 provided above are intended to augment the description provided in reference to Figures 1-9. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings as defined in the appended claims. The embodiments were chosen and described in order to best explain principles of operation and practical applications, to thereby enable others skilled in the art.

## Claims

1. A system comprising:
a mute circuit configured to:
store a mute state, the mute state modifiable only through hardware operations;
receive a mute trigger signal from a hardware source;
in response to the mute trigger signal, atomically apply the mute state to one or more sensors; and
in accordance with the mute trigger signal no longer being received, atomically clear the mute state from the one or more sensors.

2. The system of claim 1, further comprising:
a timer configured to:
count upon initiation of and while a mute trigger signal is being received; and
generate a failure signal if the mute state is not atomically applied to the one or more sensors within a predetermined time; and
the mute circuit further configured to atomically apply the mute state in response to either (i) a success signal indicating successful application of the mute state, or (ii) the failure signal from the timer.

3. The system of claim 1 or claim 2, further comprising:
a mute pending register configured to:
in response to receiving the mute trigger signal, set a pending bit;
maintain the pending bit, wherein the mute circuit is further configured to ignore subsequent mute trigger signal changes while the pending bit is maintained; and
in response to a software command, clear the pending bit.

4. The system of any preceding claim, further comprising:
an initialization register configured to:
store unmasked states of at least one of: a GPIO input, a virtual wire input, and a hardware-generated request;
prevent further modifications to the unmasked states until a hardware reset occurs; and
activate mute enforcement based on the unmasked states.

5. The system of any preceding claim, and one or more of the following:
(i) wherein the mute circuit is further configured to enter a mute state based on an initial state of enabled trigger inputs when an initialization done bit is set, without generating an interrupt;
(ii) wherein the mute state is retained through a software reset operation;
(iii) wherein applying the mute state comprises using a mute mask register configured to store a mute enforcement mask that can only be modified through write-1-to-set operations.

6. The system of any preceding claim, further comprising a plurality of microcontroller units configured to:
coordinate atomic mute operations across a plurality of subsystems based on predetermined mute sequences; and
enforce synchronized mute state transitions across the plurality of subsystems.

7. A method, comprising:
storing, by a mute circuit of a system, a mute state, the mute state modifiable only through hardware operations;
receiving, by the mute circuit, a mute trigger signal from a hardware source;
in response to the mute trigger signal, atomically applying, by the mute circuit, the mute state to one or more sensors; and
in accordance with the mute trigger signal no longer being received, atomically clearing, by the mute circuit, the mute state from the one or more sensors.

8. The method of claim 7, further comprising one or more of the following:
(i) counting, by a timer of the system, upon initiation of and while a mute trigger signal is being received;
generating, by the timer, a failure signal if the mute state is not atomically applied by the mute circuit to the one or more sensors within a predetermined time; and
atomically applying, by the mute circuit, the mute state in response to either (i) a success signal indicating successful application of the mute state, or (ii) the failure signal from the timer;
(ii) in response to receiving the mute trigger signal, setting, by a mute pending register of the system, a pending bit;
maintaining, by the mute pending register, the pending bit, wherein the mute circuit is further configured to ignore subsequent mute trigger signal changes while the pending bit is maintained; and
in response to a software command, clearing, by the mute pending register, the pending bit.

9. The method of claim 7 or claim 8, further comprising:
storing, in an initialization register of the system, unmasked states of at least one of: a GPIO input, a virtual wire input, and a hardware-generated request;
preventing, in the initialization register, further modifications to the unmasked states until a hardware reset occurs; and
activating, in the initialization register, mute enforcement based on the unmasked states.

10. The method of any one of claims 7 to 9, and one or more of the following:
(i) wherein the mute circuit is further configured to enter a mute state based on an initial state of enabled trigger inputs when an initialization done bit is set, without generating an interrupt;
(ii)...wherein the mute state is retained through a software reset operation.

11. A non-transitory computer-readable storage medium comprising executable instructions that, when executed by one or more processors, cause:
a mute circuit to:
store a mute state, the mute state modifiable only through hardware operations;
receive a mute trigger signal from a hardware source;
in response to the mute trigger signal, atomically apply the mute state to one or more sensors; and
in accordance with the mute trigger signal no longer being received, atomically clear the mute state from the one or more sensors.

12. The non-transitory computer-readable storage medium of claim 11, the executable instructions, when executed by the one or more processors, further cause:
a timer to:
count a timer upon initiation of and while a mute trigger signal is being received; and
generate a failure signal if the mute state is not atomically applied to the one or more sensors within a predetermined time; and
the mute circuit further configured to atomically apply the mute state in response to either (i) a success signal indicating successful application of the mute state, or (ii) the failure signal from the timer.

13. The non-transitory computer-readable storage medium of claim 11 or claim 12, the executable instructions, when executed by the one or more processors, further cause:
a mute pending register to:
in response to receiving the mute trigger signal, set a pending bit;
maintain the pending bit, wherein the mute circuit is further configured to ignore subsequent mute trigger signal changes while the pending bit is maintained; and
in response to a software command, clear the pending bit.

14. The non-transitory computer-readable storage medium of any one of claims 11 to 13, the executable instructions, when executed by the one or more processors, further cause:
an initialization register to:
store unmasked states of at least one of: a GPIO input, a virtual wire input, and a hardware-generated request;
prevent further modifications to the unmasked states until a hardware reset occurs; and
activate mute enforcement based on the unmasked states.

15. The non-transitory computer-readable storage medium of any one of claims 11 to 14, and one or more of the following:
(i) wherein the mute circuit is further configured to enter a mute state based on an initial state of enabled trigger inputs when an initialization done bit is set, without generating an interrupt;
(ii) wherein the mute state is retained through a software reset operation.
